# EUROPÄISCHE PATENTSCHRIFT

(11) **EP 1 301 322 B1**
(45) Veröffentlichungstag und Bekanntmachung des Hinweises auf die Patenterteilung: **15.09.2004**
(21) Anmeldenummer: 01960481.8
(22) Anmeldetag: 07.07.2001
(51) Int. Cl.: B29C 31/00

(54) **VERFAHREN UND PRODUKTIONSANLAGE ZUM HERSTELLEN VON SCHALENFÖRMIGEN, FASERMATTEN-VERSTÄRKTEN KUNSTSTOFFTEILEN**
METHOD AND DEVICE FOR PRODUCING SHELL-SHAPED PLASTIC PARTS REINFORCED WITH FIBRE MATS
PROCEDE ET DISPOSITIF PERMETTANT LA REALISATION DE PIECES EN PLASTIQUE EN FORME DE COQUES RENFORCEES PAR COUCHE DE FIBRES

(30) Priorität: 20.07.2000 DE 10035237
(43) Veröffentlichungstag der Anmeldung: 16.04.2003
(73) Patentinhaber: DaimlerChrysler AG, 70567 Stuttgart (DE)
(72) Erfinder: HABISREITINGER, Uwe, 72290 Lo burg (DE); NORDMANN, Bernhard, 71034 Böblingen (DE); OSTGATHE, Michael, 71134 Aidlingen (DE)
(86) Internationale Anmeldenummer: PCT/EP2001/007869
(87) Internationale Veröffentlichungsnummer: WO 2002/007944

(56) Entgegenhaltungen:
- US-A- 5 200 133
- PATENT ABSTRACTS OF JAPAN vol. 2000, no. 17, 5. Juni 2001 (2001-06-05) & JP 03 153321 A (BRIDGESTONE AUSTRALIA LTD), 1. Juli 1991 (1991-07-01)
- PINZELLI R: "DECOUPE ET USINAGE DES MATERIAUX COMPOSITES A BASE DE FIBRES ARAMIDES" COMPOSITES. PLASTIQUES RENFORCES FIBRES DE VERRE TEXTILE, CENTRE DOC. VERRE TEXTILE PLAS RE. PARIS, FR, Bd. 30, Nr. 4, 1. Juli 1990 (1990-07-01), Seiten 17-23, XP000162017 ISSN: 0754-0876
- DATABASE WPI Week 197747 Derwent Publications Ltd., London, GB; AN 1977-K4839Y XP002194676 & SU 538 884 A (KOLESNIK), 3. März 1977 (1977-03-03)

## Beschreibung

Die Erfindung betrifft ein Verfahren und eine Produktionsanlage zum Herstellen von schalenförmigen, faserverstärkten Kunststoffteilen, insbesondere aus Zweikomponenten-Kunstharz.

In einem Beitrag auf der Kunststofftechnik-Tagung "PUR-Technik 1996" in München vom 31.01.-1.02.1996 ist von Kleinholz et al. ein Verfahren unter dem Titel "Trägerteile für Automobilinnenverkleidungen aus naturfaserverstärktem PUR-Harz" behandelt; die entsprechenden Ausführungen sind in dem dabei herausgegebenen Konferenzbericht (PUR-Technik 1996, VDI-Verlag, ISDN 3-18-234193-6) auf den Seiten 17-30 abgedruckt. Nach dem bekannten Verfahren sollen Rohteile für Türinnenverkleidungen von Pkw-Türen hergestellt werden, bei denen Naturfasermatten (Flachs, Sisal, Jute u.a.) in Polyurethan (PUR) als Matrixkunstharz eingebettet sind. Die Fasermatten werden aus mehreren, aus aufgeschlossenen Naturfasern gebildeten Faservliesen, in denen die einzelnen Naturfasern in Wirrlage enthalten sind, durch Nadeln zu einem einheitlichen Faserverbund verfilzt und vom Mattenhersteller in Vorratsrollen angeliefert. Bei der Herstellung von Türinnenverkleidungen werden maßlich auf sie abgestimmte Zuschnitt-Teile von der Fasermattenbahn abgeschnitten und zunächst auf einen bestimmten Trockengehalt der Naturfasern konditioniert. Auf den flachen Zuschnitt werden die definiert angemischten Komponenten für das PUR-Harz in abgestimmter Menge je Flächeneinheit durch einen Roboter aufgesprüht, wobei die Harzbelegung je nach örtlicher Bauteilbeanspruchung lokal unterschiedlich sein kann. Der beharzte Mattenzuschnitt wird manuell in die Matrize der geöffneten Umformpresse eingelegt, wobei aus Hartplastik bestehende Einlegeteile, an denen Befestigungsstellen der Türinnenverkleidung ausgebildet sind, zuvor ebenfalls manuell in die Matrize eingelegt wurden. Sie verbinden sich beim Verpressen mit dem Rohteil, wobei das PUR-Harz als Klebstoff dient. Der Preßvorgang erfolgt bei Temperaturen oberhalb 100 °C und dauert etwa 40 bis 70 Sekunden. Nach dem Pressen kann das Rohteil entnommen werden, muß jedoch noch in einer gesonderten Abkühlvorrichtung auf Raumtemperatur abgekühlt werden, um ein Verziehen zu vermeiden. Nach diesem Verfahren lassen sich jedoch nur Vliese mit hoher Dehnfähigkeit in nennenswertem Ausmaß faltenfrei umformen. Das in der genannten Literaturstelle hergestellte Werkstück - Türinnenverkleidungen für Pkw-Türen - stellt in dieser Hinsicht keine hohen Anforderungen. Nicht dehnfähige Fasermatten aus geordneten, sich kontinuierlich und geradlinig über die gesamte Fasermatte hinweg erstreckenden Langfasern können in diesem Verfahren allenfalls zu wenig profilierten Werkstücken umgeformt werden. Sollen stärker profilierte Werkstücke nach diesem Verfahren unter Einsatz von nicht dehnfähigen Fasermatten hergestellt werden, so müssen diese Fasermatten in einem separaten Verfahren zuvor zu werkstück-angepaßten Vorformlingen verarbeitet werden. Das setzt jedoch voraus, daß die Fasern der Matte an den Zwickeln der gegenseitigen Überkreuzung mit Kunststoff gebunden sind. Eine solche Umhüllung der Fasern mit thermoplastischem Kunststoff verteuert jedoch die Fasermatten.

In dem vom Institut für Kunstsoffverarbeitung, Aachen herausgegebenen und im VDI-Verlag erschienen Buch "RTM/SRIM: Serienfertigung von Faserverbundbauteilen" (ISBN 3-18-990015-9) beschreibt der Beitrag 2 von A. Bruns "Entwicklung und Produktion von Bauteilen im Harzinjektionsverfahren RTM" (Seiten 28 - 36) unter der Rubrik Anwendungsbeispiele u.a. eine Anlage zur Herstellung von Außenschalen von Fahrradschutzhelmen. In eine offene Matrize eines Umformwerkzeuges werden Verstärkungszuschnitte einer Fasermatte aus Polyethylenfasern trocken eingebracht. Erforderlichenfalls können Einlegeteile, die lokal feinere Strukturen des späteren Werkstückes abbilden, zuvor in die Matrize eingelegt werden. Durch das Schließen des Umformwerkzeuges wird der Fasermattenzuschnitt in die durch die Werkzeugform vorgegebene räumliche Form drapiert. Damit der Zuschnitt sich faltenfrei in die Form einlegen läßt, muß er an geeigneten Stellen mit Einschnitten versehen sein oder es müssen mehrere, die Schalenstruktur jeweils nur partiell abdeckende, sich am Rand überlappende Zuschnitte verwendet werden. Nach dem Schließen des Umformwerkzeuges wird in die Faserstruktur der Matte ein reaktionsfähiges Harzgemisch eines duroplastisch aushärtbaren Kunstharzes (z.B. Epoxidharz (EP), Vinylesther (VE), ungesättigte Polyesther (UP) u.a.) z.B. im Vakuum-Injektionsverfahren injiziert und die eingelegten Zuschnitt-Teile der Fasermatte damit imprägniert. Das Matrixharz kann dann aushärten. Die Umformpresse hat zur Steigerung der Jahresproduktion drei Werkzeugsätze, so daß drei Helmschalen in einem Zyklus quasi-simultanen hergestellt werden können. Zudem besteht jeder Werkzeugsatz aus zwei Unterteilen (Matrize) und aus einem Oberteil (Patrize), wobei die beiden Matrizen eines Werkzeugsatzes von gegenüberliegenden Seiten der Umformpresse her in diese hinein unter die Patrize bewegt werden können. Aufgrund einer solchen Ausgestaltung der Umformpresse kann während der Reaktionszeit des einen Werkstückes die andere Matrize für einen neuen Arbeitszyklus vorbereitet, d.h. gesäubert und mit Neuteilen bestückt werden. Die beiden Matrizen jeweils eines Werkzeugsatzes können wechselweise in die Preßposition unterhalb der Patrize einerseits und in eine seitenversetzte, außerhalb der Presse liegende Vorbereitungsposition andererseits gebracht werden. Dadurch kann die Reaktionszeit des Harzes ausgenutzt werden für das Vorbereiten eines neuen Arbeitszyklus'. Nachteilig an dem bekannten RTM-Verfahren ist, daß die damit hergestellten schalenförmigen Teile eine unterbrochene Faserverstärkung aufweisen. Will man dies vermeiden, so müssen - wie weiter oben bereits erwähnt - gesondert vorgefertigte Vorformlinge aus teureren Fasermatten verwendet werden.

In dem gleichen oben erwähnten Buch befaßt sich der Beitrag 1 (Seiten 1 - 27) von Michaeli et al. "Preformherstellung - Umformen" u.a. mit der Anlagentechnik zur Herstellung von Vorformlingen aus hochporösen Matten aus Kunststoff-Fasern. Die Matten - insbesondere locker geschlagene Gewebe oder Gelege aus Glasfasern oder Glasfaser-Rovings - sind nicht nur leicht biegsam, sonder auch unter geringem Widerstand in sich scherbar. Eine derartige Matte paßt sich - ähnlich wie ein Blech in einem Tiefziehprozeß - in erstaunlichem Ausmaß an räumlich vorgegebene Oberflächenkonturen an, wenn die Matte während der Umformung vom Rand her unter Zugspannung gehalten wird. Um das Verformungspotential der Faserstrukturen voll ausschöpfen zu können, sind zum Umformen zweigeteilte Formwerkzeuge aus Matrize und Patrize notwendig. Um die Fasermatten nach ihrer Umformung in der neuen Form stabilisieren zu können, sind die Fasern derartiger Umformmatten mit einem feinen Pulver eines niedrig schmelzenden Thermoplasts oder eines thermisch reaktiven Duroplasts dotiert, wobei sich dieses bevorzugt am Faserumfang im Bereich von Überkreuzungsstellen der Fasern zwickelweise festsetzt. Der Binder wird thermisch durch Erwärmen der Matte während der Umformung aktiviert und durch anschließendes Abkühlen stabilisiert. Der so hergestellte Vorformling ist nur sehr schwach in seiner neuen Gestalt stabilisiert und muß vorsichtig gehandhabt werden. Seine Fasermatte ist noch hochporös und aufnahmefähig für ein Matrixharz. In einem in dieser Literaturstelle geschilderten Beispiel einer Verfahrensanlage ist eine Abrollstation mit drei Vorratsrollen von Fasermattenbahnen vorgesehen, deren Einzelbahnen zu einer dreilagigen Bahn zusammenlaufen. Durch einen sich quer über die Bahn erstreckenden, hubantreibbaren Schermesserbalken werden daraus einzelne Zuschnitte entsprechend einem gewünschten Werkstück abgelängt. Jeweils ein Zuschnitt wird in einer Erwärmungsstation durch Strahlung und/oder Konvektion auf Erweichungstemperatur des Bindungskunststoffs erwärmt, in erwärmtem Zustand rasch in einen Spannrahmen eingespannt und beides - Spannrahmen mit Zuschnitt - in die Umformpresse mit Matrize und Patrize zum Umformen eingeschoben. Der Spannrahmen zur Fixierung des Mattenrandes ist der Bauteilgeometrie angepaßt und bezüglich seiner Randeinspannung so beschaffen, daß der eingeklemmte Mattenrand unter Zug aus der Einklemmung herausgleiten kann. Dies wird durch spezielle Reibelemente erreicht, die mit definierter, durch Pneumatikzylinder vorgebbarer Klemmkraft anpreßbar sind und ein Nachgleiten des Fasermaterials während der Umformung ermöglichen. Die Klemmkraft muß so eingestellt werden, daß die Fasern beim Umformen weder reißen (Klemmkraft zu groß), noch daß die Fasermatte Falten wirft (Klemmkraft zu klein). Die so zu einem Vorformling umgeformte Fasermatte muß noch so lange in dem geschlossenen Werkzeug gehalten werden, bis die Fasermatte wieder abgekühlt und der Bindungskunststoff an den Knotenstellen erhärtet ist. Anschließend kann der Vorformling, der nun eine gewisse Eigensteifigkeit hat und manuell oder z.B. durch Nadelgreifer unter Beibehaltung seiner Form vorsichtig handhabbar ist, aus dem Unterwerkzeug und dem Spannrahmen entnommen werden. Vor einer Weiterverarbeitung des Vorformlings z.B. in dem zuvor geschilderten Verfahren zu einem Faserverbund-Kunststoffteil muß der im Spannrahmen verbliebene Rand des Vorformlings noch beschnitten werden.

In der Dissertation U. P. Breuer: Beitrag zur Umformtechnik gewebeverstärkter Thermoplaste, VDI Fortschrittberichte, Reihe 2: Fertigungstechnik Nr. 433, VDI Verlag 1997 (ISBN 3-18-343302-8) ist u.a. ein Verfahren zum Herstellen von schalenförmigen, faserverstärkten Kunststoffteilen aus sog. Organoblechen beschrieben. Bei diesem Halbzeug handelt es sich um blechähnliche, quasi-endlose Bahnen, die aus Matten aus anorganischen Fasern - insbesondere Glas- oder Karbonfasern - mit einem Thermoplast als Matrixharz bestehen und die meist im Coil an den Weiterverarbeiter angeliefert werden. Daraus werden werkstückentsprechende Tafeln in gewünschten Abmessungen abgelängt, diese auf Fließtemperatur des thermoplastischen Matrix-Kunststoffs erwärmt und in eine Umformpresse eingelegt. Um das erwärmte und erweichte Organobleche faltenfrei zwischen Matrize und Patrize umformen zu können, wird es während der Umformung in gespanntem Zustand gehalten, wobei der jeweils lokale Spannungszustand werkstückabhängig empirisch optimiert werden muß. Um die Matrize herum ist ein Spannrahmen angeordnet, in den der Rand des erweichten Organoblechs eingespannt wird. Die Klemmbacken sind als eine Vielzahl schmaler Rollen ausgebildet, deren jede jeweils mit einer einstellbaren Bremseinrichtung versehen ist. Dadurch ist ein Nachgleiten des Organobleches aus der Randeinspannung während der Umformung unter einer einstellbaren Zugkraft ermöglicht. Nachteilig an dieser Art der Randeinspannung ist, daß der Bauaufwand für diese Randeinklemmung sehr groß ist und diese demzufolge nicht nur in der Herstellung recht teuer ist, sondern im Betrieb auch häufige Störungen erwarten läßt. Außerdem ist es nicht möglich, den Rand lückenlos mit den Bremsrollen festzuhalten. Vielmehr lassen sich zwischen benachbarten Bremsrollen mehr oder weniger breite spannungsfreie Streifen konstruktiv nicht vermeiden, an denen sich Falten bilden können.

Auch das in der DE 198 29 352 Al gezeigte Verfahren bzw. die Vorrichtung zur Herstellung schalenförmiger Formkörper aus gewebeverstärktem Kunststoff geht von dem sog. Organoblech als Vorprodukt bzw. Halbzeug aus. Bei dem dort gezeigten Verfahren ist dem die gewünschte Endform herbeiführenden Formvorgang im Formwerkzeug ein Vorformschritt vorgeschaltet. Es handelt sich also um eine zweistufige Umformung mit Vorformung und endgültiger Formgebung. Während der Vorformung wird ein der Formwerkzeug-Gravur nur sehr grob angenäherter Stempel in die über dem Formwerkzeug ausgespannte, erweichte Kunststoffplatte hineingedrückt und das Material so der formbestimmenden Gravur grob angenähert. Erst anschließend wird durch unterseitiges Vakuum und oberseitigen Überdruck das Material vollständig an die Gravur angedrückt und so die endgültige Form im Schalenmaterial herbeigeführt. Auch die bei diesem Verfahren vorgesehene nachgiebige Randeinklemmung der gewebeverstärkten Kunststoffplatte ist zweistufig ausgebildet. Und zwar kann die Kunststoffplatte beim Vorformen weitgehend reibungsfrei aus der Randeinklemmung nachgleiten, wogegen während der endgültigen Formgebung randseitig eine der Verformung entgegenwirkende, gleichbleibenden Zugspannung ausübbar ist, die eine weitgehend faltenfreie Verformung erlaubt. Dazu wird der Plattenrand zwischen zwei Rahmen eingeklemmt, von denen der eine ortsfest dem Formwerkzeug zugeordnet ist und der andere im Pressenschließzustand relativ zum Formwerkzeug hubbeweglich ist. Er wird mit durch Federn vorbestimmte Kraft, die während der Vorformung gering und während der endgültigen Formgebung groß ist, an den unteren Rahmen angepreßt. Mit einem solchen, durch Federkraft anpreßbaren Rahmenpaar kann jedoch während der Umformung nur eine am gesamten Umfang des Plattenrandes gleichbleibende Zugkraft auf die Kunststoffplatte ausgeübt werden. Im übrigen ist diese Lösung nicht ohne weiteres auf lose Fasermatten übertragbar, die sich zum einen anisotrop verhalten - in Fadenrichtung unnachgiebig; diagonal zur Fadenrichtung nachgiebig - und die zum anderen der Gefahr unterliegen, am Rand leicht aufzuspleißen.

Problematisch bei allen von losen Fasermatten ausgehenden Verfahren ist die Handhabung der Fasermatten. Zwar sind die geschilderten, diesbezüglich Anlagen so ausgelegt, daß die Mattenzuschnitte, ausgehend von wenigstens einer aufgewickelten Materialbahn, entlang einer linearen Folge von unmittelbar aneinander anschließenden Arbeitsstationen befördert werden, wobei jedoch offen bleibt, wie dies konkret geschieht. Es ist denkbar, daß die Zuschnitte auf flachen Fördergurten oder auf einer Schar mehrerer parallel zueinander verlaufender Förderriemen getragen werden. Soll hingegen der Mattenzuschnitt z.B. nach dem Erwärmen rasch in einen Spannrahmen übergeben werden, so bereitet dies erhebliche konstruktive und betriebliche Probleme. Im übrigen sind eng verkettete Fertigungsstraßen aufgrund ihrer starren Stationenfolge zum einen störanfällig, weil eine Störung in irgend einer Station die gesamte Straße stillsetzt. Der Verfügungsgrad derartiger Fertigungsstraßen ist daher in der Regel nicht optimal. Zum anderen ist eine fördertechnisch starr verbundene Folge von Arbeitsstationen wenig flexibel und läßt sich nicht ohne weiteres auf ein anderes Produkt oder eine modifizierte Verfahrensfolge umrüsten.

Bei einer manuellen Handhabung der Zuschnitte läßt sich zwar eine Fertigungsanlage flexibel auslegen und betreiben, jedoch müssen dann die Matten oder Werkstücke von Menschen gehandhabt werden, was nicht nur monoton und auch körperlich belastend, sondern aufgrund des hohen Personaleinsatzes insbesondere in einem Mehrschichtbetrieb auch teuer ist.

Ein weiterer Problempunkt bei den bekannten Verfahren bzw. Anlagen stellt der Zustand am Rand der Zuschnitteile dar, der mehr oder weniger stark verzogen oder ausgefranst ist, wobei die Fasern mehr oder weniger stark aufgespleißt sein können, insbesondere wenn es sich - wie meist - um locker gebundene Gewebe oder Gelege von oberflächlich glatten Fasern, z.B. Glasfasern, handelt. Häufig sind die Ränder der Zuschnitte bereits unmittelbar nach dem Schneiden aufgespleißt, wenn das Schneidmittel stumpf geworden ist. Auch durch ein manuelles Handhaben großer Zuschnitte läßt sich eine Gewebeaufspleißung am Rand häufig nicht vermeiden. Verzogene oder ausgefranste Ränder der Zuschnitteile können jedoch zum einen zu Betriebsstörungen und zum anderen sogar zu Ausschußteilen führen.

Ausgehend von dem geschilderten Stand der Technik ist es Aufgabe der Erfindung, ein Verfahren und eine Produktionsanlage zum Herstellen von schalenförmigen, faserverstärkten Kunststoffteilen aufzuzeigen, das bzw. die ohne nennenswerte Einschränkungen hinsichtlich des Ausmaßes der Werkstückprofilierung leichter automatisierbar, dabei aber gleichwohl in der Verfahrensausgestaltung flexibel und im übrigen rationell und betriebssicher ist.

Diese Aufgabe wird bezüglich des Verfahrens erfindungsgemäß durch die Gesamtheit der Merkmale von Anspruch 1 und bezüglich der Produktionsanlage durch die Gesamtheit der Merkmale von Anspruch 15 gelöst. Bevorzugte Ausführungen der Erfindung sind in den Unteransprüchen 2 bis 14 und 16 bis 33 definert.

Danach wird ein Bündel von verschiedenen, jedoch gemeinsam auf eine Lösung der zugrundeliegenden Aufgabe abzielenden Maßnahmen vorgeschlagen. Zum einen wird das Herstellungsverfahren in der Schrittfolge vereinfacht, indem das faltenfreie Umformen der Fasermatten in die gewünschte Schalenform einerseits und das Aushärten der getränkten Fasermatte in dem Formwerkzeug andererseits zu einem einzigen Verfahrensschritt vereinigt sind. Außerdem werden Fasermatten nur in trockenem Zustand gehandhabt, was einen störungsfreien Verfahrensablauf sehr begünstigt. Die Verfahrensschritte sind im übrigen so gestaltet, daß alle beteiligten Komponenten, nämlich etwaige Einlegeteile, eventuell einzulegende partielle Vorformlinge, die werkstückentsprechenden Zuschnitteile und das Matrixharz, automatisiert durch Industrieroboter gehandhabt werden können. Der dazu erforderliche Freiraum oberhalb der Matrize, an der die erwähnten Handhabungsvorgänge stattfinden, wird durch eine horizontale Beweglichkeit der Matrize und durch vorübergehendes Herausfahren derselben aus der Umformpresse geschaffen.

Die mit der Erfindung erzielbaren Vorteile bestehen in folgendem:
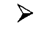 Vereinfachtes und abgekürztes Verfahren,
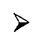 flexible Gestaltung des Verfahrensablaufes,
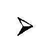 faltenfreier Verlauf der Fasermatte trotz hoher Profilierung der Schalenform des Werkstücks,
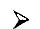 hoher Automatisierungsgrad,
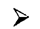 vereinfachtes Teilehandling,
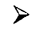 Vermeidung der Handhabung von harzbenetzten Teilen,
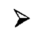 dadurch höhere Anlagenverfügbarkeit.

Von den zweckmäßigen Ausgestaltungen der Erfindung sei an dieser Stelle die von den Ansprüchen 1 und 15 abhängigen Anspruch 4 (Verfahren) und Anspruch 19 (Einrichtung) besonders hervorgehoben, nämlich das Abtrennen der werkstückentsprechenden Zuschnitte von der bevorrateten Fasermattenbahn durch eine hochrotierende schmale Schleifscheibe, insbesondere durch eine sog. Trennscheibe, wie sie in Winkelschleifern zum Trennen von Metallteilen oder Steinplatten zum Einsatz gelangen. Diese Schneidtechnik ist in der vorliegenden Anwendung nicht nur nahezu verschleißfrei, sondern führt beim Trennen von Fasermatten selbst bei längerem Einsatz zu einem stets gleichbleibend sauberen, d.h. fransenfreien und verzugfreien Schnitt. Die Fasern werden beim Trennen der Fasermatte weniger *durchgeschliffen,* als vielmehr aufgrund der hohen Auftreffgeschwindigkeit eines Schleifkorn der schmalen Schleifscheibe auf die ortsfest gehaltenen Fasern trägheitsbedingt lokal *abgeschlagen.* Sollten sich die Schleifkörner am Umfang der Schleifscheibe im Laufe eines längeren Einsatzes verschleißbedingt gerundet und/oder abgeflacht haben - dies zeigt sich selbsttätig dadurch an, daß der Widerstand beim Vorschub der Schleifscheib zunimmt -, so kann durch einen Abrichtvorgang mit einem Abrichtwerkzeug, welches z.B. ein Diamantkorn, ein Diamantvließ und/oder sonstige gebundene Hartpartikel enthält, der Umfang der Schleifscheibe wieder aufgerauht werden. Es ist allenfalls denkbar, daß nach sehr langer Einsatzzeit aufgrund vieler solcher Abrichtvorgänge an der Schleifscheibe eine Abnützung auftreten kann. Diese kann ohne weiteres durch eine entsprechende Erhöhung der Schleifscheibendrehzahl kompensiert werden, so daß die Fasermatten weiterhin mit annähernd gleichbleibender Umfangsgeschwindigkeit getrennt werden können.

Die überraschend hohe Standzeit der Schneidorgane der hier vorgeschlagenen Trenntechnik für Fasermatten ist bei näherer Betrachtung plausibel. Das Verschleißvolumen der geometrisch unbestimmten "Schneiden" - in Wahrheit sind es Schlagkanten - der vorgeschlagenen Schleifscheiben ist ungleich höher als das Verschleißvolumen der geometrisch definiert geformten konventionellen Schneidorgane, seien es rotierende oder oszillierende Messer, seien es oszillierende, lokal begrenzt schneidende Scheren oder seien es Schermesserbalken, die mit einem Hub die gesamte Bahnbreite durchtrennen. Die vielen Schleifkörner am gesamten Umfang der Schleifscheibe stehen mit ihrer unbestimmten Schneidengeometrie als effektvolle Trennorgane so lange zur Verfügung, als sie nicht abgeflacht oder verrundet sind. Bei den konventionellen Schneidorganen ist das Verschleißvolumen in jedem Fall auf einen sehr schmalen, unmittelbaren Kantenbereich der geometrisch definiert geformten Schneide beschränkt. Dieser Bereich ist nur sehr klein, insbesondere wenn man oszillierende Messer oder Scheren in Betracht zieht, die langsam quer über die Breite der Fasermattenbnahn hinweg durch diese hindurch bewegt werden. Sobald die definiert geformte Kante nicht mehr exakt scharfkantig und schartenfrei ist, beginnen die Schneidorgane zu haken und zu reißen, was sich in Form eines verzogenen, unsauberen und fransigen Schnittrandes zeigt. Das Schneidorgan muß dann gegen ein neues Ausgetauscht werden.

Nachdem vorliegend vor allem Fasern aus anorganischem Material, wie z.B. Glasfasern, Keramikfasern oder Karbonfasern, zum Einsatz kommen sollen, ist die Verschleißfrage der Trenneinrichtung und ein gleichbleibend sauberer Schnitt von besonderer Bedeutung. Die o.g. verschleiß-kritischen Fasern führen bei Einsatz von konventionellen Schneidvorrichtungen wie vorschubbeweglichen, oszilierenden Messern oder Scheren oder von Schermesserbalken zu einem relativ raschen Verschleiß der Trennorgane und zu einem Reißen an den Schnitträndern, was zu einem unsauberen deformierten und/oder ausgefransten Schnittrand an den Fasermatten führt. Es entstehen daher nicht nur Materialkosten aufgrund einer ständigen Erneuerung der Schneidorgane, sondern in diesem Zusammenhang auch mittelbare und unmittelbare Wartungskosten aufgrund von Personalbindung und Betriebsunterbrechungen. Es ist ohne weiteres einleuchtend, daß die hier vorgeschlagene Schneidtechnik auch losgelöst vom vorliegenden, erfindungsgemäß ausgestalteten Herstellungsverfahren bzw. der erfindungsgemäßen Produktionsanlage überall da genauso vorteilhaft eingesetzt werden kann, wo Mattenbahnen aus anorganischen Fasern sauber durchtrennt werden müssen.

Der Vollständigkeit halber sei in diesem Zusammenhang erwähnt, daß Textilien und auch Fasermattenbahnen für Verstärkungszwecke nach grundsätzlich anderen Methoden mit unbestimmter Schneide abgetrennt werden können, z.B. Ultraschalltrennen, Hochdruck-Wasserstrahltrennen mit oder ohne Partikel im Wasserstrahl oder Laserstrahltrennen. Nachteilig hieran ist jedoch der hohe technische Aufwand für die Erzeugung der Schneidenergie. Das Trennen von Materialbahnen mittels eines energiereichen Strahles - Wasser- oder Laserstrahl - erscheint im übrigen nur da vertretbar, wo es auf ein konturtreues Schneiden entlang kompliziert geformter Konturen ankommt, was beim vorliegenden Anwendungsfall jedoch nicht gefordert ist.

Weitere zweckmäßige Ausgestaltungen der Erfindung und deren Vorteile können den jeweiligen Unteransprüchen entnommen werden; im übrigen ist die Erfindung anhand eines in der Zeichnung dargestellten Ausführungsbeispieles nachfolgend noch erläutert; dabei zeigen:
- Fig. 1: das Lay-out der Produktionsanlage in einer schematisierten Grundrißdarstellung,
- Fig. 2: einen partiellen, vertikalen Querschnitt durch die Umformpresse mit dem geöffneten Formwerkzeug,
- Fig. 3: eine isolierte Draufsicht auf die aus Matrize und Spannrahmen bestehende Einheit einschließlich der schematisiert dargestellten Unterdruckversorgung,
- Fig. 4: eine vergrößerte Darstellung der Einzelheit IV aus Figur 2 bezüglich der Spannrahmen-Saugleiste, wobei ein weiteres Detail, die Arbeits-Oberfläche der Spannrahmen-Saugleiste betreffend, in noch stärkerer Vergrößerung herausgestellt ist,
- Fig. 5: den Vorgang des Aufsprühens von Matrixharz auf einen auf die Einheit Matrize/Spannrahmen abgelegten Fasermattenzuschnitt,
- Fig. 6: den Vorgang des Abtrennens eines Fasermattenzuschnittes vom aufgewickelten Vorrat und die Handhabung des Zuschnittes durch Industrieroboter,
- Fig. 7: eine vergrößerte Einzeldarstellung der Abschneidevorrichtung,
- Fig. 8: eine schamatische Darstellung des Vorschubes der Abschneidvorrichtung und
- Fig. 9: eine vergrößerte Darstellung der Einzelheit IX aus Figur 6, nämlich die eine der beiden Saugleiste für das Handhaben eines Fasermattenzuschnittes einschließlich der Anlenkung eines beweglichen Abdeckbleches.

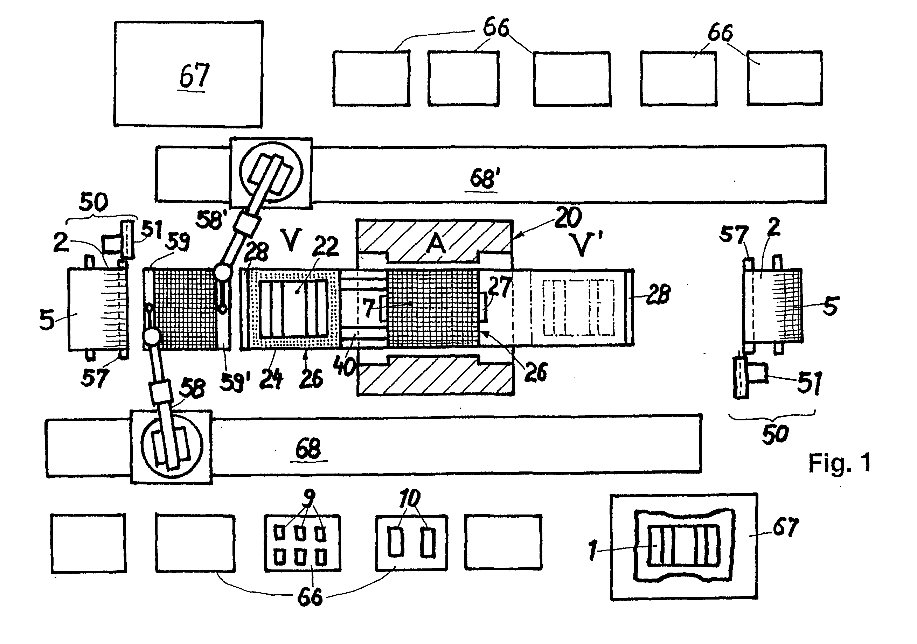

Die in dem Lay-out nach Figur 1 angedeutete Produktionsanlage dient in Ausübung des erfindungsgemäßen Verfahrens zum Herstellen von schalenförmigen, faserverstärkten Kunststoffteilen. Diese bestehen aus einer wenigstens einlagigen, der Schalenform folgenden Endlosfasermatte und aus einer die Fasern der Fasermatte allseits und porenfrei einbettenden, duroplastischen Kunststoffmatrix. Im Ausgangszustand der Fasermatte verlaufen deren Fasern oder Faserbündel 3 geradlinig und erstrecken sich unterbrechungsfrei über einen werkstückentsprechenden Zuschnitt 7. Aufgrund des gestreckten Verlaufes im Mattenverbund können die Fasern auch nach einer Umformung der Matte in die schalenförmige Werkstückform erhebliche Zugkräfte aufnehmen, jedoch ist die Fasermatte - abgesehen von einem vernachlässigbaren geringen, webtechnisch bedingten Betrag - nicht dehnbar. Hingegen sind die Fasermatten aufgrund dessen, daß die Fasern sehr locker gebunden sind, in sich ohne großen Widerstand scherbar, was zur Umformung der Fasermatten ausgenutzt wird.

Die dargestellte Produktionsanlage weist eine öffen- und schließbare Umformpresse 20 mit einem aus Matrize 22 und Patrize 23 bestehenden Formwerkzeug 21 auf. Die in der Umformpresse unten angeordnete Matrize ist allseits von einem Spannrahmen 24 für einen auf ihn abgelegten Fasermattenzuschnitt 7 umgeben. Der Spannrahmen 24 ist in räumlich unverrückbarer Zuordnung zur Matrize 22 gehalten, wobei dessen durch die Flachseite 30 bestimmte Halterungsebene des Spannrahmens zumindest angenähert mit der Formteilungsebene 25 der Matrize 22 übereinstimmt. Der Spannrahmen 24 ist derart ausgebildet, daß damit der Rand 8 eines auf dem Spannrahmen 24 abgelegten Zuschnittes 7 in der Weise festklemmbar ist, daß bei Zugeinwirkung auf den Zuschnitt 7 dessen Rand gegen einstellbaren Widerstand aus der Randeinklemmung herausgleiten kann. Hierauf soll weiter unten noch näher eingegangen werden. Die Matrize 22 und der Spannrahmen 24 sind als eine Einheit 26 horizontalbeweglich auf einer Horizontalführung 41 gelagert und geführt. Dadurch kann die Einheit Matrize/Spannrahmen zwischen einer in der Umformpresse 20 unter der Patrize 23 liegenden Arbeitsposition A einerseits und einer vollständig außerhalb der Umformpresse 20 liegenden Vorbereitungsposition V andererseits hin und herbewegt werden.

Neben der Umformpresse 20 sind beim dargestellten Ausführungsbeispiel zwei Industrieroboter 58 und 58' derart angeordnet, daß die Vorbereitungsposition V der Einheit Matrize/Spannrahmen innerhalb des Arbeitsbereiches der Industrieroboter liegt. Die Industrieroboter 58 und 58' sind auf bodennahen horizontalführungen 68 bzw. 68' verfahrbar und können dadurch die gesamte Grundfläche der Produktionsanlage abdecken. Ebenfalls innerhalb des Arbeitsbereiches der Industrieroboter sind ferner Bereitstellungsgefäße 66 zur greifgerechten Bereitstellung von Einlegeteilen 9 aus einem harten Werkstoff (Hartkunststoff, Metall) und von lokal begrenzten Vorformlingen 10 aus Fasermatten angeordnet. Die dargestellten Industrieroboter 58, 58' müssen an ihren Arbeitsarmen entweder mit Doppel- oder Mehrfachwerkzeugen oder mit rasch austauschbaren Werkzeugen bestückt sein, so daß sie unterschiedliche Aufgaben verrichten können. Vorliegend geht es hauptsächlich um das Handhaben verschiedener Gegenstände im Ablauf des Verfahrensprozesses.

Da häufig kleinere Hartteile mit komplizierter Oberflächengestalt und/oder lokal begrenzte Verstärkungsteile aus harzgetränkten Fasermatten - sog Vorformlinge - in den herzustellenden Kunststoffteilen vorgesehen sind, sind die Industrieroboter mit einem auf die einzulegenden Einlegeteile 9 adaptierten Hartteilegreifer und/oder mit einem auf die einzulegenden Vorformlinge 10 adaptierten Textilteilgreifer versehen oder bestückbar, was jedoch zeichnerisch nicht dargestellt ist. Derartige Greifer und Wechseltechniken für Roboterwerkzeuge sind an sich bekannt.

Neben der Umformpresse 20 ist ferner eine Abwickelstation 50 für eine Fasermattenbahn 2 angeordnet, die eine Halteleiste 57 zum Bereithalten des freien Bahnendes und eine Abschneidvorrichtung 51 zum Durchtrennen eines abgezogenen Abschnittes einer Fasermatte neben der Halteleiste 57 aufweist. Zumindest die Halteleiste 57 liegt ebenfalls innerhalb des Arbeitsbereiches der Industrieroboter 58, 58'. Auf das Abschneiden der Fasermatte und die dazu vorgesehene Vorrichtung soll weiter unten noch näher eingegangen werden. Die Industrieroboter 58, 58' sind - zumindest in der Verfahrensphase, in der Zuschnittteile 7 abgetrennt und gehandhabt werden sollen - jeweils mit leistenförmigen Greifern 59, 59' zum Abziehen eines Abschnittes von der bevorrateten Fasermattenbahn 2 und zum Handhaben eines abgetrennten Zuschnittes 7 versehen.

Die Industrieroboter 58, 58' lassen sich außerdem mit einer steuerbaren Auftragsdüse 61 zum Aufsprühen eines reaktionsfähigen Matrixharzes bestücken. Aufgrund dessen können sie auf einen in der Matrize 22, die sich in der Vorbereitungsposition V befindet, abgelegten partiellen Vorformling oder auf einen auf dem umgebenden Spannrahmen 24 abgelegten Fasermattenzuschnitt 7 Matrixharz automatisiert aufzusprühen. Der robotergeführten Auftragsdüse 61 werden von eine Vorrats- und Dosierstation 62 die einzelnen Komponenten des Matrixharzes im richtigen Mischungsverhältnis in separaten flexiblen Verbindungsleitungen zugeführt; die Komponenten werden in der Auftragsdüse innig vermischt.

Die Vorgehensweise bei der Herstellung von schalenförmigen, faserverstärkten Kunststoffteilen ist dann wie folgt: Die für das automatisierte Beschicken der Matrize 22 und des Spannrahmens 24 mit Zuschnitteilen 7 und Matrixharz erforderliche ungehinderte und weiträumige Zugänglichkeit zur Matrize 22 und zum Spannrahmen 24 wird dadurch geschaffen, daß eine aus Matrize 22 und Spannrahmen 24 bestehende, horizontalbewegliche Einheit 26 während dieser Phase des Arbeitszyklus' vollständig aus der Umformpresse 20 herausbewegt wird. Nach Abschluß des Bestückens der Matrize 22 und des Spannrahmens 24 wird die Einheit 26 wieder in die Umformpresse 20 und unter die Patrize 23 zurück bewegt.

Vor Ablage eines Zuschnittes 7 auf den Spannrahmen 24 werden erforderlichenfalls zunächst Einlegeteile 9 und/oder lokal begrenzte Vorformlinge 10 in die Matrize 22 eingelegt. Zum vorsichtigen Handhaben der partiellen Vorformlinge 10 können die erforderlichen Textilteilgreifer zweckmäßigerweise als an sich bekannte Nadelgreifer ausgebildet sein. Sie weisen eine an die Form des Vorformlings adaptierte Negativform mit integrierten Nestern von axialbeweglichen, gegenseitig geneigten Nadeln auf, die in die Fasermatten des Vorformlings einstechbar sind. Alle zuvor in die Matrize eingelegten Vorformlinge 10 werden vor Ablage eines nachfolgenden Zuschnittes 7 auf den Spannrahmen 24 mit einer abgestimmten Menge an Matrixharz flächendeckend eingesprüht.

Nach einem etwaigen Einlegen von Einlegeteilen (inserts) und/oder partiellen Vorformlingen (preforms) wird der werkstückentsprechende Fasermattenzuschnitt 2 automatisiert durch die Industrieroboter 58, 58' auf den die Matrize 22 umgebenden Spannrahmen 24 abgelegt und der Zuschnittrand 8 vom Spannrahmen übernommen. Der abgelegte und festgehaltene Zuschnitt 7 wird - beschränkt auf den die Matrize 22 überdeckenden Bereich - mit einer abgestimmten Menge an reaktionsfähigem Matrixharz flächendeckend besprüht. Dazu wird die beweglich geführte Sprühdüse 61 im Abstand a über den Zuschnitt hin und herbewegt.

Durch anschließendes Zurückbewegen der Einheit 26 Matrize/Spannrahmen in die Umformpresse 20 und Schließen des Formwerkzeuges 21 wird der Zuschnitt in die Matrize 22 drapiert und dabei in die gewünschte Schalenform umgeformt. Damit dieses Drapieren des nicht dehnbaren aber in der Erstreckungsebene der Fasermatte scherbaren Zuschnitts falten- und anrißfrei erfolgen kann, wird durch den Spannrahmen eine abgestimmte Zugspannung im Zuschnitt 7 aufrechterhalten, wobei der Rand aus der Randeinspannung herausgleiten kann.

Während des Drapierens des Zuschnittes 7 in die durch die Matrize 22 vorgegebene Schalenform gleitet der Zuschnittrand 8 aus der Randeinklemmung seitens des die Matrize 22 umgebenden Spannrahmens 24 nach innen nach. Zum Aufrechterhalten einer bestimmten Zugspannung im Zuschnitt 7 während dieser Drapierphase wird der Zuschnittrand 8 oberflächlich auf einer bestimmten Breite abgedeckt und die Abdeckung 36 einschließlich Zuschnittrand 8 mit definierter Kraft an die luftdurchlässige Oberseite 30 des evakuierten Spannrahmens 24 angesaugt. Diese flächendeckende und örtlich unterbrechungsfreie Randeinklemmung ist baulich sehr einfach realisierbar und für ein faltenfreies Drapieren in sofern besonders vorteilhaft, als punktuelle oder unterbrochene Einklemmungen vermieden werden, was auch für den Zuschnitt selber schonend ist. Prozeßtechnisch von besonderem Vorteil an der Vakuumklemmung ist, daß mit ihr zeitliche und sektorale Veränderungen der Vakuumklemmung leicht bewerkstelligt werden können. Zu diesem ist der Spannrahmen sektoral in unterschiedliche Kammern 35 unterteilt, so daß die Abdeckung 36 nebst Zuschnittrand 8 während der Drapierphase sektoral mit unterschiedlicher Kraft an den sektoral unterschiedlich stark evakuierten Spannrahmen 24 angesaugt werden kann.

Während der Drapierphase kann die Abdeckung nebst Zuschnittrand auch zeitlich mit veränderlicher Kraft an den Spannrahmen 24 angesaugt werden, indem das den Spannrahmen 24 oder die Sektoren evakuierende Vakuum zeitlich verändert wird. Dies kann durch regelbare Bypassdrosseln geschehen, die - ausgehend von einem leistungsfähigen und in konstanter Höhe anstehenden Primärvakuum - lokal und/oder zeitlich mehr oder weniger Außenluft in die evakuierte Spannrahmenleiste eindringen und demgemäß das dort wirksame Vakuum mehr oder weniger stark absinken läßt. Zusätzlich zu der Vakuumanpressung kann der Zuschnittrand 8 während der Drapierphase durch die Abdeckung 36 mechanisch an die Oberseite 30 des Spannrahmens 24 mit voreinstellbarer Kraft angedrückt werden, die zu diesem Zweck eigensteif ausgebildet ist und in geschlossenem Zustand des Werkzeugs durch eine Folge von Federn 37 elastisch an den Spannrahmen vorgespannt ist. Durch diese Vorspannug der Abdeckung kann eine gewisse, zeitlich konstant bleibende Grundkraft der Randeinklemmung vorgesehen oder eingestellt werden, die sich der Klemmkraft seitens der Vakuumklemmung überlagert. Über den Umfang der Abdeckung 36 hinweg kann die Vorspannung der Federn 37 unterschiedlich hoch eingestellt werden, so daß die mechanische Grundkraft der Randeinklemmung peripher unterschiedlich groß sein kann.

Zugleich mit dem Umformen des Zuschnitts 7, vor allem aber gegen Ende der Drapierphase und danach, wird das Matrixharz in die Faserzwischenräume gepreßt und eingeschlossene Luft daraus verdrängt. Anschließend wird die harzgetränkte Fasermatte 7 während einer abgestimmten Zeitspanne in dem umgeformten und gepreßten Zustand gehalten und dabei das Matrixharz innerhalb des Formwerkzeuges 21 durch Wärmeeinwirkung ausgehärtet.

Wegen des thermischen Aushärtens des Matrixharzes sind die Patrize und die Matrize also beheizbar ausgebildet; sie werden während des Produktionsbetriebes auf Aushärtetemperatur temperiert. Da in der Vorbereitungs- oder Bestückungsphase die harzgetränkten Vorformlinge 10 oder Zuschnitte 7 die Patrize nicht berühren, braucht die Patrize 23 nicht gekühlt zu werden. Eine Kühlung der Matrize 22 kann im übrigen auf den Bereich beschränkt sein, in dem Vorformlinge aufgelegt und mit Matrixharz getränkt werden. Unter Umständen kann auf ein vorheriges Besprühen kleinerer und/oder in der Lagenzahl schwächerer Vorformlinge verzichtet werden, wenn statt dessen an der betreffenden Stelle der Mattenzuschnitt 7 entsprechend stärker besprüht wird. Wegen einer Entbehrlichkeit einer Kühlung der Patrize 23 und weitgehend auch der Matrize 22 können relativ kurze Aushärtezeiten realisiert werden, weil ein zyklisches Abkühlen und Anwärmen der Werkzeugteile nicht oder zumindest nicht vollständig erforderlich ist. Die fertigen Werkstücke können außerhalb des Formwerkzeuges abkühlen, wobei die Ablage des frisch entnommenen Kunstoffteiles in einer negativ entsprechenden, gekühlten Formschale von Vorteil ist, um ein Verziehen zu vermeiden.

Nach dem Öffnen des Formwerkzeuges 21 wird das ausgehärtete Kunststoffteil 1 entnommen. Nach dem Abkühlen desselben wird der außerhalb der gewünschten Schalenform des Werkstücks liegende, dem Ausspannen des Zuschnitts 7 während der Umformphase dienende Zuschnittrand 8 vom Werkstück abgetrennt. Dieses Besäumen der Schalenform des Werkstücks, d.h. das Abtrennen des Zuschnittrandes 8 vom Werkstück, erfolgt zweckmäßigerweise durch eine hochrotierende schmale Schleifscheibe. Dieser Arbeitsschritt erfolgt jedoch außerhalb der dargestellten Produktionsanlage in einer gesonderten Arbeitsstation. Die erwähnte Schleifscheibe - beispielsweise ein handelsüblicher Handwinkelschleifer mit eingesetzter Trennscheibe für Metall oder Stein - kann durch einen programmierbaren Industrieroboter der Begrenzungskontur des schalenförmigen Werkstücks entlanggeführt werden. Um das Werkstück dabei lagedefiniert und kippsicher fixieren zu können, kann es in einer ortsfesten, dem Werkstück negativ entsprechenden Gegenschale aufgenommen und darin durch Unterdruck festgehalten werden. In kinematischer Umkehr dieses Besäumschrittes ist es auch möglich, das zu besäumende schalenförmigen Werkstück lagedefiniert und kippsicher in einem robotergeführten Formwerkzeug zu fixieren und den Werkstückrand einer ortsfest gehalterten, hochrotierenden, schmalen Schleif- oder Trennscheibe entlangzuführen.

Im Falle mehrlagiger Fasermatten wird das Ablegen und Einklemmen eines werkstückentsprechenden Zuschnittes 7 auf den bzw. am Spannrahmen 24 und das anschließende Besprühen des abgelegten Zuschnittes 7 mit reaktionsfähigem Matrixharz entsprechend der gewünschten Lagenzahl wiederholt, bevor alle eingelegten und besprühten Zuschnitte 7 gemeinsam umgeformt und gepreßt werden. Zwar wäre es für den Fall einer mehrlagigen Verstärkung im Kunststoffteil 1 ohne weiteres auch denkbar, von vornherein eine mehrlagige Fasermattenbahn bereitzustellen, wie dies aus dem eingangs gewürdigten Stand der Technik bereits bekannt ist. Das sukzessive Ablegen und Einsprühen der Zuschnitte hat demgegenüber jedoch den Vorteil, daß die einzelnen Zuschnitte kreuzweise übereinander abgelegt werden können und so eine meist vorhandene Anisotropie der Fasermatte ausgeglichen werden kann. Im übrigen stellt das einzelne Einsprühen der Lagen eine gleichmäßigere Verteilung des Matrixharzes innerhalb des Lagenverbundes sicher. Nachdem ferner die Aushärtezeit des Matrixharzes taktzeitbestimmend ist und bei einem automatisierten Tandembetrieb des Verfahrens mit zwei wechselweise bestückbaren und preß- und aushärtbaren Matrizen in der Vorbereitungszeit genügend Zeit für ein einzelnes Ablegen und besprühen der Lagen zur Verfügung steht, kann das Bestücken ohne weiteres auch mehrere Arbeitsoperationen umfassen.

Als Matrixharz kann vorzugsweise ein Epoxidharz (EP) verwendet werden, welches dem fertigen Kunststoffteil eine höhere Festigkeit verleiht, als z.B. Polyurethan (PUR). Um das Epoxidharz ohne unzulässig starke Lufteinschlüsse im Matrixharz sprühend, d.h. in einem offenen System, verarbeiten zu können, wird das Epoxidharz in der Viskosität sprühfähig dünnflüssig eingestellt und mit einer aus der Lackiertechnik bekannten Misch- und Sprühdüse 61 aufgetragen, in der die einzelnen Komponenten des Harzes der Mischdüse in gesonderten Leitungen von einer Vorrats- und Dosierstation 62 zugeführt und erst in der Mischdüse innig miteinander vermischt werden. Zum Auftragen wird eine Sprühdüse mit schmaler flacher Strahlform ausgewählt, die - auf ein kurzes Zeitinkrement gesehen - jeweils nur einen relativ schmalen und kurzen Streifen auf der Fasermatte beaufschlagt. Z.B. ist die Düse 61 bezüglich der Strahlform so ausgewählt und/oder eingestellt, daß unter Berücksichtigung des Abstandes a der Sprühdüse vom zu besprühenden Zuschnitt 7 während der Sprühdüsenbewegung eine Breite b von vorzugsweise von etwa 10 cm mit Epoxidharz besprüht wird.

Der oben bereits kurz erwähnte Tandembetrieb des Verfahrens kann aufgrund einer Mehrfach-, vorzugsweise einer Doppelanordnung horizontalbeweglicher Einheiten 26 aus Matrize 22 und Spannrahmen 24 realisiert werden. Die verschiedenen Einheiten 26 werden im Wechselzyklus außerhalb der Umformpresse 20 bestückt und innerhalb der Umformpresse 20 behandelt. Beim dargestellten Ausführungsbeispiel sind in und an der Umformpresse 20 zwei separate, jeweils aus Matrize 22 und Spannrahmen 24 bestehende Einheiten 26 auf einer Horizontalführung 41 horizontalbeweglich angeordnet, die wechselweise zwischen einer Arbeitsposition A und je einer Vorbereitungsposition V, V' hin und her verschiebbar sind, wobei die eine Vorbereitungsposition V auf der einen Seite der Umformpresse und die andere (V') auf der gegenüberliegenden Seite angeordnet ist. Die Horizontalführung 41 erstreckt sich durchgehend von der einen zur anderen Pressenseite durch die Umformpresse hindurch. Die zwei den gegenüberliegenden Seiten der Umformpresse zugeordnete Einheiten 26 sind beim dargestellten Ausführungsbeispiel durch Verbindungen 40 starr miteinander gekoppelt und wie ein einheitlicher Schlitten gemeinsam auf der Horizontalführung 41 verschiebbar. Der zugehörige Antrieb zum Verschieben der Einheiten ist zeichnerisch nicht dargestellt. Unabhängig von dem Verschiebeantrieb sind zur mechanischen Sicherung der verbundenen Einheiten in den unterschiedlichen Endstellungen - Arbeits- bzw. der Vorbereitungsposition - Anschläge 27 und 28 vorgesehen. Jeweils einer der beiden unbeweglichen Anschläge 28 an den gegenüberliegenden Enden der Horizontalführung 41 sichert die Position der Doppel-Einheit beim Einfahren in die jeweils neue Position. Jeweils einer der beiden, innerhalb der Umformpresse angebrachten, hubbeweglichen Anschläge 27 sichert die Doppel-Einheit in der Gegenrichtung. Insbesondere die jeweils innerhalb der Umformpresse positionierte Matrize 22 muß besonders genau relativ zur Patrize 23 positioniert werden, damit sie gut mit ihr zusammenarbeiten kann.

Alle infrastrukturellen Einrichtungen der Produktionsanlage, wie Industrieroboter 58, 58', Abwickelstation 50, Abschneidevorrichtung 51, Bereitstellungsgefäße 66 und Ablagestationen 67 sind wegen der rationellen Tandembetriebsweise des Verfahrens doppelt, und zwar beim dargestellten Ausführungsbeispiel symmetrisch zur Mitte der Umformpresse 20 angeordnet. Dabei sind die Logistik-Einrichtungen der Produktionsanlage, nämlich die Bereitstellungsgefäße 66 und die Ablagestationen 67 peripher an der Produktionsanlage angeordnet, damit sie ohne den Gefahrenbereich der Industrieroboter betreten zu müssen erreicht werden können.

Das automatisiert betriebene Verfahren arbeitet von einer Vorratsrolle 5, auf der ein gewisser Vorrat einer Fasermattenbahn 2 aufgewickelt ist. Es ist auch denkbar, daß mehrere Vorratsrollen bereitgehalten werden, was jedoch zeichnerisch nicht dargestellt ist. Eine Mehrfachanordnung von Vorratsrollen kann selbst bei dem hier beschrieben Verfahren im Hinblick auf einen raschen Rollenwechsel, wenn die eine Vorratsrolle leer ist, sinnvoll sein. Eine Mehrfachanordnung von Vorratsrollen kann aber auch zur raschen Herstellung mehrlagiger Mattenzuschnitte zumindest dann von Vorteil sein, wenn die einzelnen lagen isotrop sind oder wenn sie sich in ihrer Anisotropie gerade gegenseitig ergänzen oder kompensieren.

Zum Erzeugen einzelner Zuschnitte wird das freie Ende der Fasermattenbahn 2, welches durch eine ortsfeste, in der Haltefunktion steuerbare Halteleiste 57 lagedefiniert bereitgehalten wird, von einer robotergeführten Greifleiste 59' auf der gesamten Bahnbreite erfaßt, ein werkstückentsprechender Abschnitt der Fasermattenbahn 2 von der Vorratsrolle 5 abgezogen, das andere Ende des Abschnittes durch eine zweite robotergeführte Greifleiste 59 ebenfalls auf der gesamten Bahnbreite erfaßt, die Fasermattenbahn 2 in dem zwischen der ortsfesten Halteleiste 57 und der zweiten Greifleiste 59 liegenden Bereich durchtrennt und der abgetrennte Zuschnitt 7 auf den Spannrahmen 24 abgelegt.

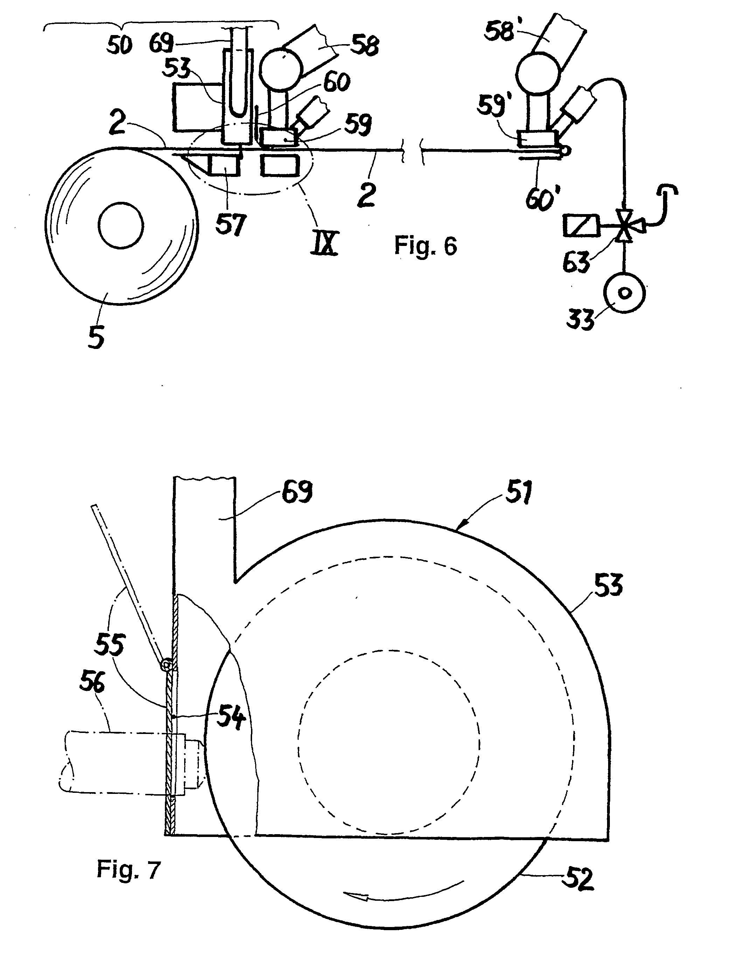

Bei dem in den Figuren 1 und 6 dargestellten Ausführungsbeispiel sind zwei separate Greifleisten 59, 59' für die Handhabung des Zuschnitts 7 vorgesehen, deren jede am Arbeitsarm je eines separaten Industrieroboters 58, 58' angeordnet ist. Beim Handhaben des Zuschnittes werden die beiden Greifleisten synchron und äquidistand zueinander bewegt; die beiden Industrieroboter müssen entsprechend programmiert und miteinander im Programmablauf synchronisiert sein. Der Vorteil einer solchen Handhabung liegt darin, daß alle möglichen Formate von Fasermatten ohne weiteres, d.h. ohne Bereithaltung formatentsprechender Greifer, gehandhabt werden können. Dadurch ist das Handling sehr flexibel. Alternativ ist es auch denkbar, daß die zwei Greifleisten 59, 59' für das Zuschnitt-Handling Teil eines einheitlichen Greiferrahmens sind, der von nur einem Industrieroboter gehandhabt ist. Zur Verbesserung der Flexibilität kann der Greiferrahmen größenveränderbar ausgebildet sein, so daß er unterschiedlichen Zuschnittformaten angepaßt werden kann. In jedem Fall wird der von der bevorrateten Fasermattenbahn 2 abgetrennte, werkstückentsprechende Zuschnitt 7 an zwei gegenüberliegenden Seiten von den robotergeführten Greifleisten übernommen und auf den Spannrahmen 24 und die Matrize 22 abgelegt.

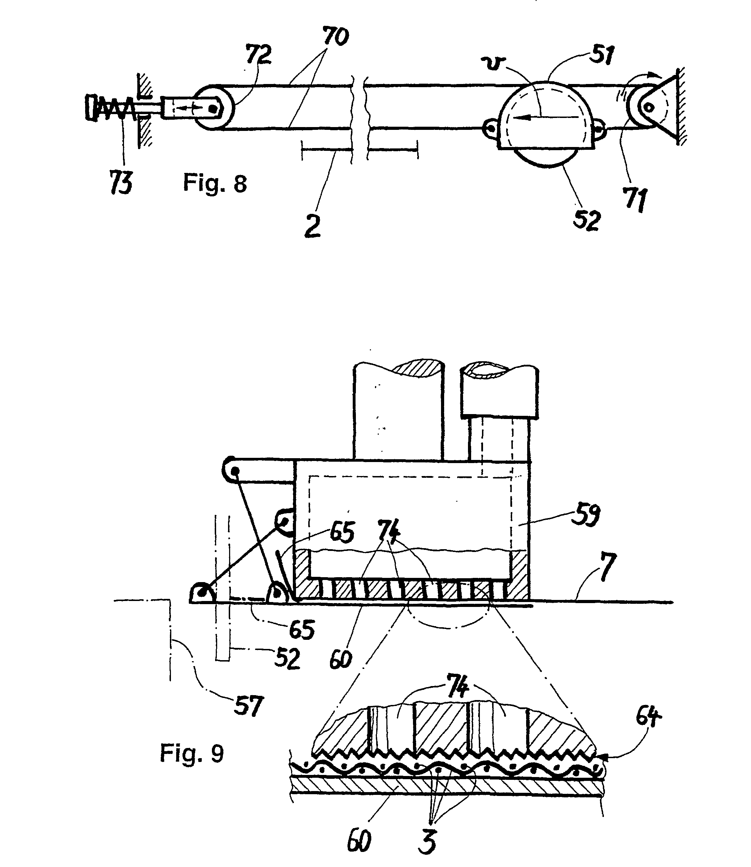

Die Greifleisten für die Handhabung des Zuschnitts 7 sind gemäß der Darstellung in den Figuren 6 und 9 als abdeckbare Saugleiste 59, 59' ausgebildet. Sie sind im Querschnitt als geschlossenes Hohlprofil gestaltet, das an einer Flachseite mit einem flächendeckenden Raster von Bohrungen 74 versehen ist. Das Innere des Hohlprofils ist über ein steuerbares Ventil 63 wahlweise an eine Unterdruckquelle 33 anschließbar oder mit Umgebungsluftdruck beaufschlagbar. Die saugwirksame Flachseite ist an den Rand 8 des Zuschnitts 7 anlegbar und hält ihn mittels Unterdruck pneumatisch fest. Zur Sicherung einer hohen Haltekraft der Saugleiste kann - wie im Ausführungsbeispiel gezeigt - die saugwirksame Flachseite der Handhabungs-Saugleisten mit einer Aufrauhung 64 vesehen, also gerauht oder geriffelt ausgebildet sein.

Wie in dem in den Figuren 6 und 9 dargestellten Ausführungsbeispiel zu ersehen ist, sind dort die Saugleisten 59 und 59' beispielsweise mit klappbaren Abdeckblechen 60 bzw. 60' versehen. Zunächst, d.h. beim Anlegen der Saugleisten an den zu ergreifenden Zuschnittrand sind diese Abdeckbleche gemäß Beispiel seitlich zurückgeklappt und geben die gelochte Anlagefläche frei. Statt einer klappbaren Zuordnung der Abdeckbleche sind auch andere Anlenkungen oder zuordnungen, z.B. auch frei bewegliche Abdeckbleche denkbar. Im Beispielsfall müssen die Saugleisten so an den Rand des Zuschnittes angelegt werden, daß die Scharnierachse des beweglich angelenkten Abdeckbleches etwa bündig mit der Endkante des Zuschnittes zu liegen kommt. Nach dem pneumatischen Erfassen des Zuschnittrandes durch die Saugleiste und nach einem geringfügigen Abheben des Randes von der Unterlage wird das jeweilige Abdeckblech durch einen an der Saugleiste angebrachten Schwenkantrieb (nicht dargestellt) um etwa 270° verschwenkt und von außen über den erfaßten Zuschnittrand geklappt und dieser luftdicht abgedeckt. Aufgrund dieser Abdeckung wird die Leckrate der Handhabungs-Saugleisten deutlich reduziert; zugleich steigt damit auch die pneumatische Festhaltekraft der Saugleiste, weil das Vakuum in der Saugleiste ansteigt. Die Abdeckbleche 60, 60' haben also die Aufgabe, den Luft- und Energieverbrauch an pneumatischer Energie zu reduzieren und nebenbei auch noch die Haltekraft zu erhöhen.

Die als erstes an das freie, von der Halteleiste 57 bereitgehaltene Ende der Fasermattenbahn 2 anlegbare Saugleiste 59' kann mit ihrer einen Längskante unmittelbar bündig zur Mattenschnittkante, d.h. ohne irgend einen Überstand zuzulassen, an die Fasermatte angelegt werden. Das zugehörige Abdeckblech kann deshalb bei dieser Saugleiste durch ein einfaches Scharnier, z.B. durch ein sog. Klavierband, an der einen Längskante der Saugleiste angelenkt werden. Die als zweites an den vom Vorrat abgezogenen Fasermattenabschnitt anzulegende Saugleiste 59 nach Figur 9 - in Figur 6 links dargestellt - hält die Fasermattenbahn gemeinsam mit der Halteleiste 57 während des Abschneidens fest. Wegen des Platzbedarfes der Abschneidevorrichtung 51 ergibt sich stets ein gerinfügiger seitlicher Überstand 65 der Fasermatte, der an der Längsseite der Saugleiste 59 übersteht. Damit dieser Überstand beispielsweise durch das einzuschwenkende Abdeckblech 60 nicht eingeklemmt wird - dies würde zum einen ein sauberes Anliegen des Abdeckblechs auf dem Zuschnittrand und zum anderen später ein flaches Ablegen auf dem Spannrahmen 24 beeinträchtigen -, ist das Abdeckblech 60 mittels eines kinematischen Gelenkvierecks an die Saugleiste 59 angeschlagen, die einerseits eine 270°-Schwenkung des Abdeckbleches erlaubt, die aber andererseits den Überstand 65 umfahren und ihn nach oben wegdrücken kann.

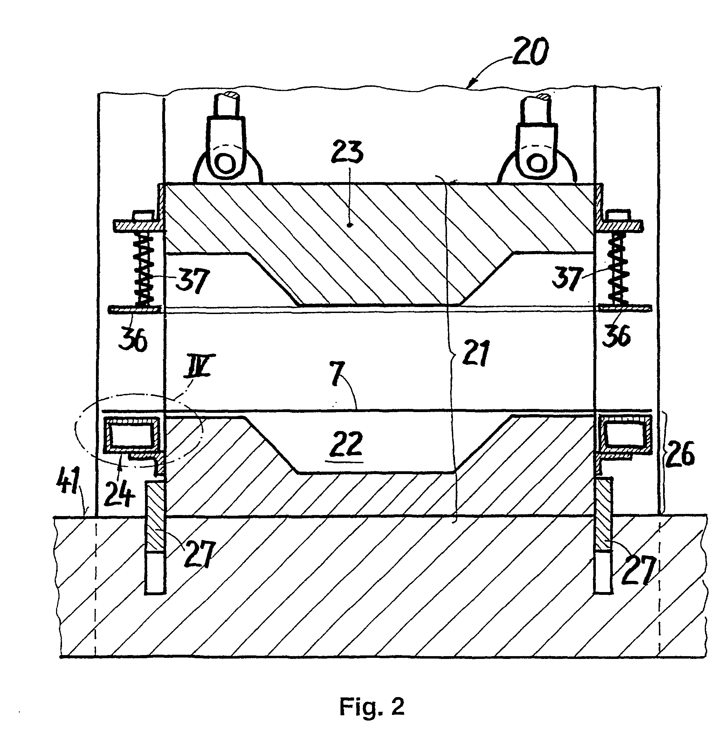

Damit der Rand 8 eines auf dem Spannrahmen 24 abgelegten Zuschnittes 7 auf ihm pneumatisch festgehalten werden kann, sind die Rahmenschenkel des Spannrahmens 24 jeweils als Saugleisten 29, 29' gestaltet, die im Querschnitt als geschlossenes Hohlprofil ausgebildet sind, wie die Figuren 2, 3 und 4 zeigen. Das Innere des Hohlprofils ist über ein steuerbares Ventil 34 wahlweise an eine Unterdruckquelle 33 anschließbar oder mit Umgebungsluftdruck beaufschlagbar. Die Unterdruckquelle ist aus einer Vakuumpumpe 42 und einem Vakuumkessel 43 gebildet. Die den Rand 8 des Zuschnitts 7 aufnehmende Flachseite 30 einer jeden Saugleiste ist jeweils mit einem flächendeckenden Raster von Bohrungen 31 versehenen.

Während der Bestückungsphase, d.h. wenn der Spannrahmen 24 sich noch außerhalb der Umformpresse befindet, wird das Innere der Saugleisten kurz vor Übergabe eines Zuschnittes 7 mit Vakuum beaufschlagt. Soll ein Zuschnitt 7 von den robotergeführten Greifleisten auf den Spannrahmen abgelegt werden, so wird - nachdem die Abdeckbleche 60, 60' der Greifer-Saugleisten 59, 59 beiseite geklappt sind und der Zuschnitt in gestreckter Lage über dem Spannrahmen ausgerichtet und auf ihn angedrückt ist - das Vakuum der Greifleisten abgeschaltet, so daß der abgelegte Zuschnitt unmittelbar vom Vakuum der Spannrahmen-Saugleisten 29, 29' übernommen wird. Durch das Ablegen des Fasermattenzuschnitts auf der Flachseite 30 der Spannrahmen-Saugleisten steigt der Luftwiderstand der dort eingeschnüffelten Luft stark an, weil die Luft nun durch die Maschen und Poren der Fasermatte hindurchdringen muß. Entsprechend dieses Durchflußwiderstandes steigt auch der in den Saugleisten 29, 29' zunächst noch mäßig anstehende Unterdruck ebenfalls stark an. Dieser Unterdruck reicht aus, um den abgelegten Zuschnitt 7 während der Bestückungsphase, während des Auftragens von Matrixharz und während des Einschiebens der Einheit in die Arbeitsposition A sicher am Spannrahmen festhalten zu können.

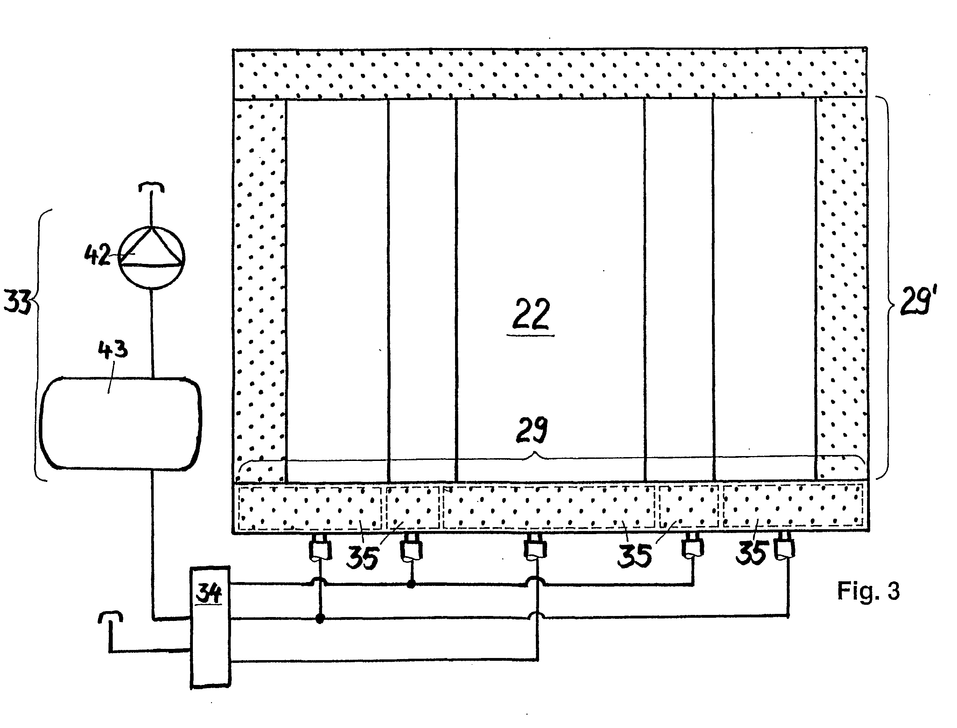

Während der Umformphase, d.h. beim Schließen des Formwerkzeuges und während des Drapierens des getränkten Zuschnittes in die Matrize, muß der Rand 8 des Zuschnittes mit wesentlich höherer Kraft am Spannrahmen nachgleitend festgehalten werden. Zu diesem Zweck wird die freiliegende Oberfläche des Mattenrandes in der Umformphase am gesamten Umfang mit einem Abdeckblech 36 abgedeckt. Der Luftwiderstand, mit dem nun Umgebungsluft in die Spannrahmen-Saugleisten eingeschnüffelt werden kann, steigt nun sehr stark an und ebenso das in den Spannrahmen-Saugleisten anstehende Vakuum. Der Rand 8 wird dadurch pneumatisch mit hoher Kraft am Spannrahmen festgehalten, so daß beim Drapieren des Zuschnittes durch die Patrize eine erhebliche Zugkraft in der Fasermatte aufgebaut werden kann. Bei richtiger Bemessung des Niveaus der Zugkraft und der richtigen Verteilung der Höhe der Zugkraft über den Umfang des Spannrahmens ist es möglich, die Fasermatte einerseits faltenfrei und andererseits anrißfrei in der Matrize zu drapieren. Um die Höhe der pneumatisch wirksamen Festhaltekraft entlang einer Spannrahmen-Saugleisten 29 auf unterschiedlicher Höhe einstellen zu können, ist die betreffende Spannrahmen-Saugleiste gemäß Figur 3 in verschiedene Kammern 35 unterteilt, die gegeneinander abgeteilt und separat ansteuerbar sind. Die Höhe des Vakuums in den einzelnen Kammern ergibt sich bei vorgegebener, als konstant hoch angenommener Leistungsfähigkeit der Unterdruckquelle aus der Menge der jeweils eingeschnüffelten Luft, also aus der Leckrate, die durch justierbare Bypassdrosseln einstellbar ist.

Beim dargestellten Ausführungsbeispiel (Figur 2) ist die Abdeckung 36 für die Spannrahmen-Saugleisten 29, 29' an der Patrize 23 elastisch nachgiebig angeordnet, die in der Umformpresse 20 heb- und senkbar ist. Mit der niedergehenden Patrize 23 wird auch die Abdeckung 36 auf den Rand 8 des im Spannrahmen 24 aufgenommenen Zuschnitts 7 abgesenkt, wobei die Abdeckung durch die Federn 37 elastisch an den Rand 8 angedrückt wird. Die Abdeckung ist der Gravur der Patrize vorgelagert, so daß sie sich bei niedergehender Patrize als erstes gegen den Rand 8 des Zuschnittes anlegt. Das Abdeckblech 36 ist einerseits in Hubrichtung weich und anschmiegsam, so daß es am gesamten Umfang buckelfrei am Rand 8 des Zuschnittes anliegt. Hierzu trägt sicher auch eine dichte Anordnung von Andrückfedern 37 bei. Andererseits ist das Abdeckblech in Horizontalrichtung stabil genug, damit es beim Nachgleiten des Randes aus der Randeinklemmung nicht nachgibt. Die Stabilität der Abdeckung in Horizontalrichtung wird ebenfalls durch eine Dichte folge von Führungsbolzen begünstigt, von denen jeweils einer im Inneren einer Andrückfeder 37 angeordnet ist.

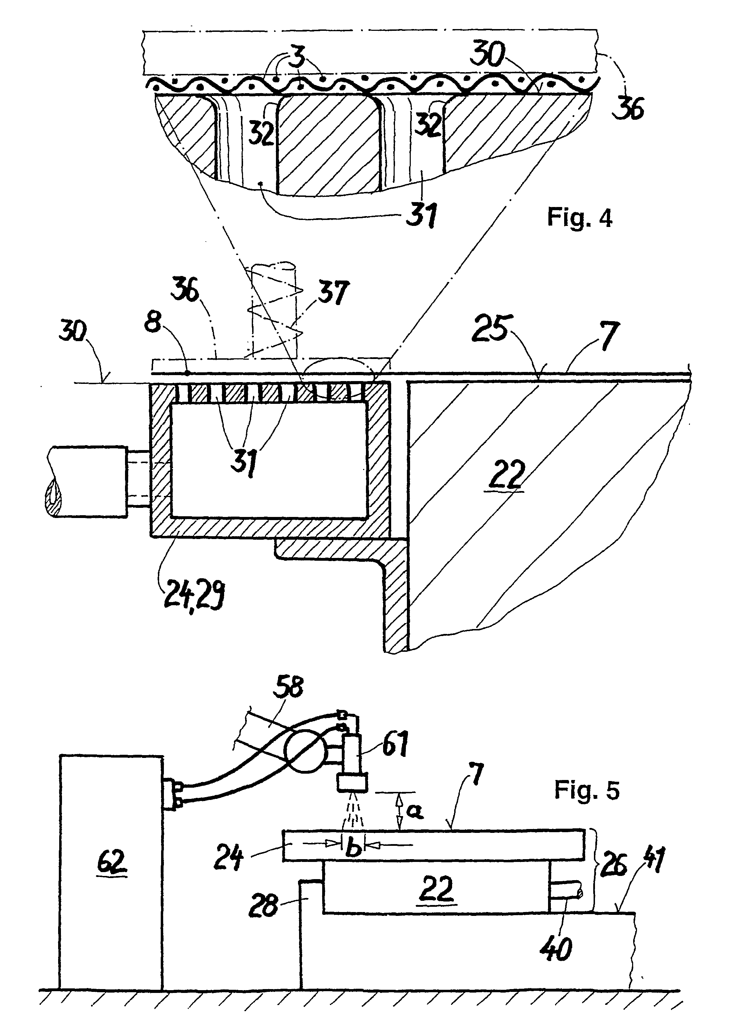

Meist reichen die zwischen der gelochten Flachseite 30 und der Abdeckung 36 pneumatisch aufbringbaren Kräfte aus, um den Rand 8 des Zuschnittes mit der lokal erforderlichemn Kraft nachgleidend einklemmen zu können. Um ein störungsfreies Nachgleiten des eingeklemmten Randes zu ermöglichen, ist beim dargestellten Ausführungsbeispiel (Figur 4) die Oberfläche der Flachseite 30 der Spannrahmen-Saugleisten glatt ausgebildet; im übrigen gehen die Bohrungen 31 des flächendeckenden Bohrungsrasters verrundet (Verrundung 32) in die Flachseite über. Dadurch kann die Fasermatte kontrolliert zwischen den sie einklemmenden Flächen herausgleiten. Allenfalls in Sonderfällen, wo an lokal eng begrenzten Stellen eine besonders hohe Festhaltekraft erforderlich ist und/oder ein Nachgleiten vermieden werden soll, mag es sinnvoll sein, die Oberflächen an der Flachseite und/oder an der Abdeckung lokal begrenzt mit einer Aufrauhung nach dem Vorbild der Figur 9 für die Handhabungs-Saugleisten zu versehen.

Es soll nun anhand der Figuren 6, 7 und 8 noch näher auf das hier eingesetzte, jedoch allgemein verwendbare Verfahren und die Vorrichtung zum sauberen Durchtrennen von Mattenbahnen aus anorganischen Fasern eingegangen werden.

Der von der Vorratsrolle 5 abgezogene werkstückentsprechende Fasermattenzuschnitt 7 wird von der Fasermattenbahn 2 durch eine hochrotierende schmale Schleifscheibe 52 abgetrennt. Hierbei handelt es sich um eine beim Trennen von Metall oder Stein übliche Trennscheibe. Sie wird parallel zur Rotationsebene und entlang der die Fasermattenbahn 2 festhaltenden Halteleiste 57 einerseits und der benachbart angreifenden Greifleisten 59 andererseits mit einer abgestimmter Vorschubgeschwindigkeit v durch die Fasermatte 2 hindurchbewegt. Diese Trenntechnik ist sehr effizient, einfach, kostengünstig und verschleißarm. Auch nach längerem Einsatz wird ein stets gleichbleibend sauberer, verzug- und fransenfreier Schnitt erzeugt.

Ein schmaler, an der Stelle der Schleifscheibe 52 liegender Streifen der ortsfest gehaltenen Fasermatte wird durch die mit hoher Umfangsgeschwindigkeit rotierende Schleifscheibe (3000 - 5000 U/min) in feine Faserbruchstücke zerschlagen. Um diesen Staub aus scharfkantigen Partikeln nicht in die Arbeitsplatzumgebung gelangen zu lassen, ist die Schleifscheibe 52 auf der aus der Fasermattenbahn 2 austauchenden Seite gekapselt und die Kapselung 53 über einen Sauganschluß 69 an eine Staubabsaugung angeschlossen.

Nach längerem Einsatz der Schneidvorrichtung kann es geschehen, daß die am Außenumfang der Schleifscheibe 52 liegenden Schleifkörner sich verschleißbedingt verrunden oder abflachen.

Dies zeigt sich an einem erhöhten Widerstand beim Vorschieben der Abschneidevorrichtung. Um den Verschleißzustand der Schleifscheibe überwachen zu können, ist die Einrichtung zum Vorschieben der Abschneidevorrichtung 51 durch die Fasermattenbahn 2 hindurch mit einer Einrichtung zum Messen der Vorschubkraft sowie mit einer Signaleinrichtung versehen, die bei Überschreiten der Vorschubkraft über einen voreinstellbaren Schwellwert ein nach außen wahrnehmbares Signal abgibt. Dies ist bei dem in Figur 8 schematisch dargestellten Ausführungsbeispiel dadurch realisiert, daß die auf einer nicht dargestellten Stangenführung und auf Rollen gleitende Abschneidevorrichtung 51 mittels einer in sich geschlossenen Schlaufe 70 eines Seilzuges oder einer Kette in Vorschubrichtung v angetrieben und nach dem Trennschnitt in entgegengesetzter Richtung im Eilgang wieder zurückgeholt wird. Die sich quer über die zu trennende Fasermattenbahn 2 erstreckende Schlaufe 70 ist einerends über eine drehangetriebene Antriebsrolle 71 und anderends über eine Spannrolle 72 geführt. Die unter der Kraft einer Spannfeder 73 gehaltene, horizontal beweglich gelagerte Spannrolle 72 hält die Schlaufe unter einer bestimmten Vorspannung. Steigt der Widerstand der Fasermattenbahn gegen die in Figur 8 nach links vordringende Schleifscheibe 52 unzulässig stark an, so weicht die Spannrolle 72 in entgegengesetzter Richtung, also nach rechts aus und spannt die Feder 73 stärker an. Dieser Ausweichhub der Spannrolle kann durch einen Mikroschalter abgetastet werden. Durch einen damit schließbaren Stromkreis kann ein akustisches und/oder optisches Warnsignal für das Wartungspersonal ausgelöst werden. Es ist dann Zeit, die Schleifscheibe 52 kurz abzurichten.

Um die Schleifscheibe 52 problemlos und rasch abrichten zu können, weist die Kapselung 53 der Schleifscheibe eine Öffnung 54 zum Einführen eines Abrichtwerkzeuges 56 auf. Die Öffnung ist normalerweise durch eine Klappe 55 oder einen Schieber verschlossen, um die Staubabsaugung nicht zu beeinträchtigen.

Mittels eines an den Umfang der rotierenden Schleifscheibe radial angedrückt Abrichtwerkzeuges 56 können am Umfang der Schleifscheibe wieder neue, kantige Schleifkörner freigelegt werden.

Durch die Anwendung der beschriebenen Erfindung können insgesamt die folgenden Vorteile erreicht werden:
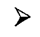 Zur faltenfreien Drapierung der textilen Zuschnitte werden gezielt horizontal wirksame Zugkräfte in das Textil eingeleitet. Das Textil wird bei der Umformung zwischen einer perforierten und einer luftundurchlässigen Leiste geführt. Über die Perforation wird ein Unterdruck aufgebaut. Mit sehr einfachen Mitteln kann durch eine Einteilung der perforierten Leiste in verschiedene Bereiche und eine Variation des Unterdrucks in diesen Kammern die Rückhaltekraft genau dosiert werden. Außerdem wird der Zuschnittrand auf einer gewissen Breite peripher unterbrechungsfrei und flächig, d.h. nicht etwa an einzelnen Punkten oder entlang kurzer Linienstücke, festgehalten. Ein flächiges und unterbrechungsfreies Festhalten des Zuschnittrandes begünstigt jedoch ein faltenfreies Drapieren des Zuschnitts in die Form, insbesondere wenn die Festhaltekraft sektoral und über die Zeit hinweg rasch verändert und den momentanen Erfordernissen optimal angepaßt werden kann.
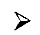 Aufgrund der Verwendung von zwei Matrizen (bei Einsparung einer Patrize im Vergleich zu zwei vollständigen Werkzeugen) und den Auftrag des Matrixharzes auf den Zuschnitt bzw. gegebenenfalls auf den partiellen Vorformling wird die Taktzeit gegenüber konventionellen Verfahren (z. B. Injektionsverfahren) deutlich reduziert.
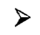 Durch den Einsatz eines offenen Systems selbst bei der Verarbeitung von Epoxidharz ist der rationelle und Taktzeitreduzierende Tandembetrieb möglich.
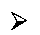 Das erfindungsgemäße Verfahren vermeidet die Handhabung von harzbeschichteten Textilien und vermeidet so das Risiko von verschmutzungsbedingten Betriebsstörungen erheblich. Bei anderen Verfahren treten z.B. aufgrund der Verschmutzung von Einrichtungen, z.B. von Nadelgreifern mit beweglichen Nadeln, immer wieder Betriebsstörungen auf. Durch die Erfindung wird also die Anlagenverfügbarkeit verbessert.
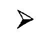 Der Aufbau der Anlage erfordert eine minimale Fläche. Durch die ringförmige Anordnung der Ausgangsmaterialien um die Anlage ist eine Bestückung der Magazine bei laufender Produktion möglich.
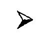 Aufgrund des Zuschneidens der Verstärkungstextilien zeitlich und örtlich unmittelbar vor der Verarbeitung werden zusätzliche Handhabung und Transport eingespart. Dadurch wird die Gefahr des Ausfransens sowie des unerwünschten Verzugs der Textilien minimiert.
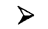 Das Zuschneiden der Textilien erfolgt mit geometrisch unbestimmter Schneide. Sowohl Glas- als auch Kohlenststoffasern können so mit hoher Schnittkantenqualität und hohen Standzeiten des Schneidmittels zugeschnitten werden.
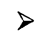 Die Handhabung, der Transport und die Positionierung der Verstärkungstextilien erfolgen mittels pneumatischer, vakuumwirksamer Greifsysteme. Der Vorteil dieser Saugleisten ist neben dem einfachen Aufbau vor allem in einer homogenen Krafteinleitung in den Zuschnitt und in einem daraus resultierenden nahezu verzugsfreien Ablegen des Textils zu sehen.

## Patentansprüche

1. Verfahren zum Herstellen von schalenförmigen Kunststoffteilen (1) aus faserverstärktem, duroplastischem Kunststoff in einer Umformpresse (20) mit einem eine Matrize (22) und eine Patrize (23) aufweisenden Formwerkzeug (21), bei dem nacheinander folgende Maßnahmen vorgenommen werden:
a) ein von der Endlosfasermatte (2) abgetrennter, werkstückentsprechender Zuschnitt (7) wird automatisiert durch Industrieroboter (58, 58') auf die aus der Umformpresse (20) herausgefahrene Matrize (22) abgelegt und dort durch einen sie umgebenden Spannrahmen (24) nachführbar festgehalten,
b) der im Spannrahmen (24) abgelegte Zuschnitt (7) wird in dem die Matrize (22) überdeckenden Bereich von einer im Abstand (a) zum Zuschnitt (7) beweglich geführten Sprühdüse (61) mit einer abgestimmten Menge an reaktionsfähigem Matrixharz flächendeckend besprüht,
c) nach Zurückbewegen der Einheit (26) Matrize/Spannrahmen in die Umformpresse (20) und Schließen des Formwerkzeuges (21) wird unter Aufrechterhaltung einer abgestimmten Zugspannung im Zuschnitt (7) dieser falten- und anrißfrei in die Matrize (22) drapiert, der Zuschnitt (7) dabei in die gewünschte Schalenform umgeformt, zugleich das Matrixharz in die Faserzwischenräume gepreßt und eingeschlossene Luft daraus verdrängt,
d) die harzgetränkte Fasermatte (7) wird während einer abgestimmten Zeitspanne in dem umgeformten und gepreßten Zustand gehalten und dabei das Matrixharz innerhalb des Formwerkzeuges (21) ausgehärtet,
e) nach dem Öffnen des Formwerkzeuges (21) wird das Kunststoffteil (1) entnommen und der außerhalb der gewünschten Schalenform des Werkstücks liegende, dem Ausspannen des Zuschnitts (7) während der Umformphase dienende Zuschnittrand (8) vom Werkstück abgetrennt.

2. Verfahren nach Anspruch 1,
**dadurch gekennzeichnet, daß**
aufgrund einer Mehrfach-, vorzugsweise einer Doppelanordnung horizontalbeweglicher Einheiten (26) aus Matrize (22) und Spannrahmen (24) die verschiedenen Einheiten (26) im Wechselzyklus außerhalb der Umformpresse (20) bestückt und innerhalb der Umformpresse (20) behandelt werden.

3. Verfahren nach Anspruch 1,
**dadurch gekennzeichnet, daß**
das freie Ende einer auf einer Vorratsrolle (5) aufgewickelten Fasermattenbahn (2), welches durch eine ortsfeste, in der Haltefunktion steuerbare Halteleiste (57) lagedefiniert bereitgehalten wird, von einer robotergeführten Greifleiste (59') auf der gesamten Bahnbreite erfaßt, ein werkstückentsprechender Abschnitt der Fasermattenbahn (2) von der Vorratsrolle (5) abgezogen, das andere Ende des Abschnittes durch eine zweite robotergeführte Greifleiste (59) ebenfalls auf der gesamten Bahnbreite erfaßt, die Fasermattenbahn (2) in dem zwischen der ortsfesten Halteleiste (57) und der zweiten Greifleiste (59) liegenden Bereich durchtrennt und der abgetrennte Zuschnitt (7) auf den Spannrahmen (24) abgelegt wird.

4. Verfahren nach Anspruch 1,
**dadurch gekennzeichnet, daß**
der von einer Vorratsrolle (5) abgezogene werkstückentsprechende Abschnitt einer Fasermatte (2) von der aufgewickelten Fasermattenbahn durch eine hochrotierende schmale Schleifscheibe (52) abgetrennt wird, die parallel zur Rotationsebene entlang einer Linie zwischen zwei eng benachbarten, die Fasermattenbahn (2) festhaltenden Halte- oder Greifleisten (57, 59) bei abgestimmter Vorschubgeschwindigkeit (v) durch die Fasermatte (2) hindurchbewegt wird.

5. Verfahren nach Anspruch 1,
**dadurch gekennzeichnet, daß**
der von einer bevorrateten Fasermattenbahn (2) abgetrennte, werkstückentsprechende Zuschnitt (7) an zwei gegenüberliegenden Seiten von robotergeführten Greifleisten (59, 59') übernommen und auf den Spannrahmen (24) und die Matrize (22) abgelegt wird.

6. Verfahren nach Anspruch 1,
**dadurch gekennzeichnet, daß**
vor Ablage des oder eines ersten Zuschnittes (7) von mehreren Zuschnitten auf den Spannrahmen (24) zunächst Einlegeteile (9) und/oder lokal begrenzte Vorformlinge (10) in die Matrize (22) eingelegt werden.

7. Verfahren nach Anspruch 6,
**dadurch gekennzeichnet, daß**
alle zuvor einzulegenden Vorformlinge (10) vor Ablage des Zuschnittes (7) auf den Spannrahmen (24) mit einer abgstimmten Menge an Matrixharz flächendeckend eingesprüht werden.

8. Verfahren nach Anspruch 1,
**dadurch gekennzeichnet, daß**
das Ablegen und Festhalten eines werkstückentsprechenden Zuschnittes (7) auf den bzw. am Spannrahmen (24) und das anschließende Besprühen des abgelegten Zuschnittes (7) mit reaktionsfähigem Matrixharz entsprechend der gewünschten Lagenzahl wiederholt und erst anschließend das Umformen und Pressen der eingelegten und besprühten Zuschnitte (7) für alle gemeinsam durchgeführt wird.

9. Verfahren nach Anspruch 1,
**dadurch gekennzeichnet, daß**
als Matrixharz Epoxidharz verwendet wird, welches in der Viskosität sprühfähig dünnflüssig eingestellt ist, wobei die Sprühdüse (61) bezüglich der Strahlform so ausgewählt und/oder so eingestellt ist, daß unter Berücksichtigung des Abstandes (a) der Sprühdüse (61) vom zu besprühenden Fasermattenzuschnitt (7) während der Sprühdüsenbewegung eine Breite (b) von 5 bis 15 cm, vorzugsweise von etwa 10 cm mit Epoxidharz besprüht wird.

10. Verfahren nach Anspruch 1,
**dadurch gekennzeichnet, daß**
zum Aufrechterhalten einer bestimmten Zugspannung im Zuschnitt (7) während des Drapierens desselben in die durch die Matrize (22) vorgegebene Schalenform und während des Nachgleitens des Zuschnittrandes (8) aus der Randeinklemmung seitens des die Matrize (22) umgebenden Spannrahmens (24) - nachfolgend Drapierphase genannt - der Zuschnittrand (8) oberflächlich auf einer bestimmten Breite abgedeckt und die Abdeckung (36) einschließlich Zuschnittrand (8) mit definierter Kraft an die luftdurchlässige Oberseite (30) des evakuierten Spannrahmens (24) angesaugt wird.

11. Verfahren nach Anspruch 10,
**dadurch gekennzeichnet, daß**
die Abdeckung (36) nebst Zuschnittrand (8) während der Drapierphase sektoral mit unterschiedlicher Kraft an den sektoral in unterschiedliche Kammern (35) unterteilten und dementsprechend unterschiedlich stark evakuierten Spannrahmen (24) angesaugt wird.

12. Verfahren nach Anspruch 10,
**dadurch gekennzeichnet, daß**
die Abdeckung (36) nebst Zuschnittrand (8) während der Drapierphase zeitlich mit veränderlicher Kraft an den Spannrahmen (24) angesaugt wird, indem das den Spannrahmen (24) oder die Sektoren desselben evakuierende Vakuum zeitlich verändert wird.

13. Verfahren nach Anspruch 10,
**dadurch gekennzeichnet, daß**
der Zuschnittrand (8) während der Drapierphase zusätzlich zu der Vakuumanpressung durch die elastisch vorgespannte, eigensteife Abdeckung (36) mechanisch an die Oberseite (30) des Spannrahmens (24) mit voreinstellbarer Kraft angedrückt wird.

14. Verfahren nach Anspruch 1,
**dadurch gekennzeichnet, daß**
daß das Besäumen der Schalenform des Werkstücks, d.h. das Abtrennen des dem Ausspannen des Zuschnitts (7) während der Umformphase dienende Zuschnittrandes (8) vom Werkstück (1) durch eine hochrotierende schmale Schleifscheibe erfolgt.

15. Produktionsanlage zum Herstellen von schalenförmigen, faserverstärkten Kunststoffteilen (1), insbesondere zur Ausübung des Verfahrens nach Anspruch 1, welche Kunststoffteile (1) aus einer wenigstens einlagigen, der Schalenform folgenden Endlosfasermatte (7) und aus einer die Fasern (3) der Fasermatte (7) allseits und porenfrei einbettenden, duroplastischen Kunststoffmatrix - im folgenden "Matrixharz" genannt - bestehen, welche Endlosfasermatte im Ausgangszustand aus geradlinig und unterbrechungsfrei sich über einen werkstückentsprechenden Zuschnitt (7) erstreckenden Fasern oder Faserbündel (3) gebildet ist, und welche Produktionsanlage mit folgenden Komponenten ausgestattet ist und diese mit folgenden Merkmalen ausgebildet sind:
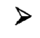 eine öffen- und schließbare Umformpresse (20) mit einem aus Matrize (22) und Patrize (23) bestehenden Formwerkzeug (21),
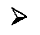 die in der Umformpresse (20) unten angeordnete Matrize (22) ist allseits von einem Spannrahmen (24) für einen auf ihn abgelegten Fasermattenzuschnitt (7) umgeben, welcher Spannrahmen (24) in räumlich unverrückbarer Zuordnung zur Matrize (22) gehalten ist, wobei die Halterungsebene (Flachseite 30) eines im Spannrahmen (24) aufgenommenen Fasermattenzuschnittes (7) zumindest angenähert mit der Formteilungsebene (25) der Matrize (22) übereinstimmt,
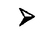 der Spannrahmen (24) ist derart ausgebildet, daß damit der Rand (8) eines auf dem Spannrahmen (24) abgelegten Zuschnittes (7) in der Weise festklemmbar ist, daß bei Zugeinwirkung auf den Zuschnitt (7) der Rand (8) gegen einstellbaren Widerstand aus der Randeinklemmung herausgleitbar ist,
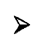 die Matrize (22) und der Spannrahmen (24) sind als eine Einheit (26) horizontalbeweglich gelagert und geführt (Horizontalführung 41), die zwischen einer in der Umformpresse (20) unter der Patrize (23) liegenden Arbeitsposition (A) einerseits und einer vollständig außerhalb der Umformpresse (20) liegenden Vorbereitungsposition (V, V') andererseits hin und herbewegbar ist,
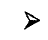 neben der Umformpresse (20) ist wenigsten ein Industrieroboter (58, 58') derart angeordnet, daß die Vorbereitungsposition (V, V') der Einheit (26) Matrize/Spannrahmen innerhalb des Arbeitsbereiches des/der Industrieroboter (58, 58') liegt,
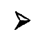 innerhalb des Arbeitsbereiches des/der Industrieroboter (58, 58') sind ferner Bereitstellungsgefäße (66) zur greifgerechten Bereitstellung von Einlegeteilen (9) und/oder von lokal begrenzten Vorformlingen (10) aus Fasermatten angeordnet,
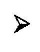 einer der vorgesehenen Industrieroboter (58, 58') oder der wenigstens eine Industrieroboter ist mit einem auf die einzulegenden Einlegeteile (9) adaptierten Hartteilegreifer und/oder mit einem auf die einzulegenden Vorformlinge (10) adaptierten Textilteilgreifer versehen,
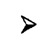 neben der Umformpresse (20) ist ferner eine Abwickelstation (50) für wenigstens eine Fasermattenbahn (2) angeordnet, die eine Halteleiste (57) zum Bereithalten des freien Bahnendes und eine Abschneidvorrichtung (51) zum Durchtrennen eines abgezogenen Abschnittes einer Fasermatte (2) neben der Halteleiste (57) aufweist, wobei die Halteleiste (57) ebenfalls innerhalb des Arbeitsbereiches des/der Industrieroboter (58, 58') liegt,
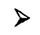 einer der vorgesehenen Industrieroboter (58, 58') oder der wenigstens eine Industrieroboter ist ferner mit einem Greifer (59') zum Abziehen eines Abschnittes von der bevorrateten Fasermattenbahn (2) und zum Handhaben eines abgetrennten Zuschnittes (7) versehen,
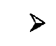 einer der vorgesehenen Industrieroboter (58, 58') oder der wenigstens eine Industrieroboter ist ferner mit einer steuerbaren Auftragsdüse (61) zum Aufsprühen eines reaktionsfähigen Matrixharzes auf einen auf der in der Vorbereitungsposition (V, V') befindlichen Matrize (22) abgelegten partiellen Vorformling oder einen dort abgelegten Fasermattenzuschnitt (7) versehen, wobei dieser robotergeführten Auftragsdüse (61) eine Vorrats- und Mischstation (62) für die einzelnen Komponenten des Matrixharzes zugeordnet ist.

16. Produktionsanlage nach Anspruch 15,
**dadurch gekennzeichnet, daß**
in und an der Umformpresse (20) mehrere, vorzugsweise zwei separate, jeweils aus Matrize (22) und Spannrahmen (24) bestehende Einheiten (26) horizontalbeweglich (Horizontalführung 41) angeordnet sind, die wechselweise zwischen einer Arbeitsposition (A) und einer Vorbereitungsposition (V, V') hin und her verschiebbar sind.

17. Produktionsanlage nach Anspruch 15,
**dadurch gekennzeichnet, daß**
zwei separate Einheiten (26) Matrize/Spannrahmen an gegenüberliegenden Seiten der Umformpresse (20) angeordnet sind.

18. Produktionsanlage nach Anspruch 17,
**dadurch gekennzeichnet, daß**
die zwei separaten, an gegenüberliegenden Seiten der Umformpresse angeordnete Einheiten (26) aus Matrize (22) und Spannrahmen (24) starr miteinander gekoppelt (Verbindung 40) und gemeinsam geradlinig horizontal verschiebbar geführt sind (Führung 41).

19. Produktionsanlage nach Anspruch 15,
**dadurch gekennzeichnet, daß**
die Abschneidvorrichtung (51) für die Fasermattenbahn (2) durch eine hochrotierende schmale Schleifscheibe (52) gebildet ist, die parallel zur Rotationsebene der Schleifscheibe (52) und parallel zu der das freie Ende der Fasermattenbahn (2) festhaltenden Halteleiste (57) mit einstellbarer Vorschubgeschwindigkeit (v) quer über die Fasermattenbahn (2) verschiebbar ist.

20. Produktionsanlage nach Anspruch 19,
**dadurch gekennzeichnet, daß**
die Schleifscheibe (52) auf der aus der Fasermattenbahn (2) austauchenden Seite gekapselt und die Kapselung (53) an eine Staubabsaugung (Sauganschluß 69) angeschlossen ist.

21. Produktionsanlage nach Anspruch 20,
**dadurch gekennzeichnet, daß**
am Außenumfang der Kapselung (53) eine durch eine Klappe (55) oder einen Schieber verschließbare Öffnung (54) zur Einführung eines Abrichtwerkzeuges (56) für die Schleifscheibe (52) vorgesehen ist.

22. Produktionsanlage nach Anspruch 19,
**dadurch gekennzeichnet, daß**
die Produktionsanlage zum Vorschieben der Abschneidvorrichtung (51) durch die Fasermattenbahn (2) hindurch mit einer Einrichtung zum Messen der Vorschubkraft sowie mit einer derart ausgebildeten Signaleinrichtung versehen ist, daß ein Überschreiten der Vorschubkraft über einen voreinstellbaren Schwellwert nach außen signalisierbar ist.

23. Produktionsanlage nach Anspruch 19 und 22,
**dadurch gekennzeichnet, daß**
die Schleifscheibe (52) mit einem mechanisch in Axialrichtung zu ihr geführten, radial zustellbaren Abrichtwerkzeug versehen ist, welches seinerseits mit einem axialen servomotorischen Vorschubantrieb und mit einem radialen servomotorischen Zustellantrieb versehen ist, mit dem die Schleifscheibe (52) auf einen Abrichtbefehl hin nach einem voreingebbaren Programm selbsttätig abrichtbar ist.

24. Produktionsanlage nach Anspruch 15,
**dadurch gekennzeichnet, daß**
die den Rand (8) eines auf dem Spannrahmen (24) abgelegten Zuschnittes (7) festhaltenden Rahmenschenkel (29, 29') des Spannrahmens (24) jeweils als abdeckbare (Abdeckblech 36) Saugleisten (29, 29') ausgebildet sind, die im Querschnitt als geschlossenes Hohlprofil mit einer den Rand (8) des Zuschnitts (7) aufnehmenden, mit einem flächendeckenden Raster von Bohrungen (31) versehenen Flachseite (30) ausgebildet sind, wobei das Innere des Hohlprofils über ein steuerbares Ventil (34) wahlweise an eine Unterdruckquelle (33) anschließbar oder mit Umgebungsluftdruck beaufschlagbar ist.

25. Produktionsanlage nach Anspruch 24,
**dadurch gekennzeichnet, daß**
zumindest eine der Spannrahmen-Saugleisten (29) in gegeneinander abgeteilte, separat ansteuerbare Kammern (35) unterteilt ist.

26. Produktionsanlage nach Anspruch 15,
**dadurch gekennzeichnet, daß**
die den Rand (8) des Zuschnitts (7) aufnehmende Oberfläche der Flachseite (30) der Spannrahmen-Saugleisten (29, 29') zumindest partiell glatt ausgebildet ist und verrundet in die Bohrungen (31) des flächendeckenden Bohrungsrasters übergeht.

27. Produktionsanlage nach Anspruch 15,
**dadurch gekennzeichnet, daß**
die Abdeckung (36) der als Saugleisten (29, 29') ausgebildeten Rahmenschenkel des Spannrahmens (24) an der in der Umformpresse (20) heb- und senkbaren Patrize (23) angeordnet und mit der niedergehenden Patrize (23) auf den Rand (8) des im Spannrahmen (24) aufgenommenen Zuschnitts (7) absenkbar und elastisch (Federn 37) an ihn (8) andrückbar ist.

28. Produktionsanlage nach Anspruch 15,
**dadurch gekennzeichnet, daß**
die Greifleisten für die Handhabung des Zuschnitts (7) als abdeckbare Saugleiste (59, 59') ausgebildet sind, die im Querschnitt als geschlossenes Hohlprofil mit einer an den Rand (8) des Zuschnitts (7) anlegbaren, mit einem flächendeckenden Raster von Bohrungen (74) versehenen Flachseite ausgebildet ist, wobei das Innere des Hohlprofils über ein steuerbares Ventil (63) wahlweise an eine Unterdruckquelle (33) anschließbar oder mit Umgebungsluftdruck beaufschlagbar ist.

29. Produktionsanlage nach Anspruch 15,
**dadurch gekennzeichnet, daß**
die an den Rand (8) des Zuschnitts (7) anlegbare Oberfläche der Flachseite der Saugleisten (59, 59') für die Handhabung des Zuschnitts (7) gerauht (Aufrauhung 64) oder geriffelt ist.

30. Produktionsanlage nach Anspruch 15,
**dadurch gekennzeichnet, daß**
zwei separate Greifleisten (59, 59') für die Handhabung des Zuschnitts (7) vorgesehen sind, deren jede am Arbeitsarm je eines separaten Industrieroboters (58, 58') angeordnet ist.

31. Produktionsanlage nach Anspruch 15,
**dadurch gekennzeichnet, daß**
der Textilteilgreifer zur Handhabung der partiellen Vorformlinge (10) als Nadelgreifer ausgebildet ist.

32. Produktionsanlage nach Anspruch 15,
**dadurch gekennzeichnet, daß**
alle infrastrukturellen Einrichtungen der Produktionsanlage, wie Industrieroboter (58, 58'), Abwickelstation (50), Abschneidevorrichtung (51), Bereitstellungsgefäße (66) und Ablagestationen (67) doppelt, vorzugsweise symmetrisch zur Mitte der Umformpresse (20), angeordnet sind.

33. Produktionsanlage nach Anspruch 15,
**dadurch gekennzeichnet, daß**
die Logistik-Einrichtungen der Produktionsanlage, nämlich die Abwickelstation (50), die Bereitstellungsgefäße (66) und die Ablagestationen (67) peripher an der Produktionsanlage angeordnet sind.

## Claims

1. Method of producing shell-shaped plastic parts (1) made from fibre-reinforced thermosetting plastic in a forming press (20) with a forming tool (21) having a female mould (22) and a male mould (23), in which the following actions are performed one after the other:
a) a blank (7) corresponding to a workpiece is cut from an endless fibre mat (2) and placed by a robot (58, 58'), in an automated process, on the female mould (22) extracted from the forming press (20), where it is firmly held by a clamping frame (24) surrounding it so that it can be tracked,
b) the blank (7) placed in the clamping frame (24) is sprayed over its entire surface with a specifically determined quantity of reactive matrix resin in the region overlapping with the female mould (22) by a moving spray nozzle (61) guided at a distance (a) from the blank (7),
c) once the female mould/clamping frame unit (26) has been moved back into the forming press (20) and the forming tool (21) closed, the blank (7) is maintained at a specifically determined tension and draped in the female mould (22) so that it is free of folds and incipient cracks, and the blank (7) is formed into the desired shell shape so that the matrix resin is simultaneously pressed into the spaces between the fibres and any trapped air forced out,
d) the resin-impregnated fibre mat (7) is held in the shaped and pressed state for a specifically determined period so that the matrix resin is cured inside the forming tool (21),
e) the forming tool (21) is opened and the plastic part (1) removed, and the blank edge (8) used to stretch the blank (7) during the forming phase which does not conform to the desired shell shape is trimmed off the workpiece.

2. Method as claimed in claim 1,
**characterised in that**
as a result of a multiple arrangement, preferably a double arrangement, of horizontally moving units (26) comprising female mould (22) and clamping frame (24), the different units (26) can be loaded outside the forming press (20) and processed inside the forming press (20) in alternating cycles.

3. Method as claimed in claim 1,
**characterised in that**
the free end of a fibre mat web (2) rolled onto a supply reel (5) held in readiness in a defined position by means of a holding bar (57), which is stationary in the retaining function, is picked up by the entire web width by means of a robot-guided gripping bar (59'), a length of fibre mat web (2) corresponding to the workpiece is pulled off the supply reel (5) and the other end of the length is gripped by a second robot-guided gripping bar (59), also across the entire web width, the fibre mat web (2) is cut in the region lying between the stationary holding bar (57) and the second gripping bar (59) and the separated blank (7) is placed on the clamping frame (24).

4. Method as claimed in claim 1,
**characterised in that**
the length of a fibre mat (2) corresponding to a workpiece drawn off from a supply reel (5) is cut from the reeled fibre mat web by a slim grinding wheel (52) rotating at high speed, which is moved parallel with the rotation plane at a specifically determined feed rate (v) through the fibre mat (2) along a line between two closely adjacent holding or gripping bars (57, 59) holding the fibre mat (2).

5. Method as claimed in claim 1,
**characterised in that**
the blank (7) corresponding to a workpiece cut from a reeled fibre mat web (2) is picked up by its two oppositely lying ends by robot-guided gripper bars (59, 59') and placed on the clamping frame (24) and the female mould (22).

6. Method as claimed in claim 1,
**characterised in that**
before placing the or a first blank (7) of a number of blanks on the clamping frame (24), insert parts (9) and/or locally delimited preforms (10) are firstly placed in the female mould (22).

7. Method as claimed in claim 6,
**characterised in that**
all preforms (10) introduced prior to positioning the blank (7) on the clamping frame (24) are firstly sprayed with a specifically determined quantity of matrix resin to cover their entire surface.

8. Method as claimed in claim 1,
**characterised in that**
the process of positioning and fixing the blank (7) corresponding to a workpiece on and in the clamping frame (24) and spraying the blank (7) thus positioned with reactive matrix resin is repeated depending on the desired number of layers and only then are the positioned and sprayed blanks (7) formed and pressed, all of them together.

9. Method as claimed in claim 1,
**characterised in that**
the matrix resin used is epoxy resin, which is formulated to a viscosity rendering it highly fluid so that it can be sprayed, and the spray nozzle (61) is selected and/or set in terms of the jet shape such that epoxy resin is sprayed over a width (b) of 5 to 15 cm, preferably approximately 10 cm as the spray nozzle is moved, taking account of the distance (a) of the spray nozzle (61) from the fibre mat blank (7) to be sprayed.

10. Method as claimed in claim 1,
**characterised in that**
in order to maintain a specific tension in the blank (7), is it is draped in the shell shape defined by the female mould (22) and as the blank edge (8) is slid out of the edge clamp at the side of the clamping frame (24) surrounding the female mould (22) - hereafter called the draping phase - a specific width of the blank edge (8) surface is covered and the cover (36) including the blank edge (8) is sucked by a defined force against the air-permeable top face (30) of the evacuated clamping frame (24).

11. Method as claimed in claim 10,
**characterised in that**
during the draping phase, differing degrees of force are applied to different sectors of the cover (36) and the blank edge (8) on the clamping frame (24), which is sectorally sub-divided into different chambers (35) so that suction is applied accordingly to differing degrees.

12. Method as claimed in claim 10,
**characterised in that**
during the draping phase, the cover (36) and blank edge (8) are sucked against the clamping frame (24) with a varying force over time and the vacuum evacuating the clamping frame (24) or the sectors thereof is varied over time.

13. Method as claimed in claim 10,
**characterised in that**
during the draping phase, the blank edge (8) is mechanically pressed against the top face (30) of the clamping frame (24) with a pre-definable force by means of the elastically biassed, intrinsically stiff cover (36) in addition to being pressed by the vacuum.

14. Method as claimed in claim 1,
**characterised in that**
the workpiece is trimmed to the shell shape, i.e. the blank edge (8) used to stretch the blank (7) during the forming phase is trimmed from the workpiece (1), by means of a slim grinding wheel rotating at high speed.

15. Production installation for producing shell-shaped fibre-reinforced plastic parts (1), in particular for implementing the method as claimed in claim 1, which plastic parts (1) are made from at least one layer of endless fibre mat (7) conforming to the shell shape and from a thermosetting plastic matrix - hereafter called "matrix resin" - embedding all sides of the fibres (3) of the fibre mat (7) and free of pores, which endless fibre mat, in the initial state, comprises fibres or fibre bundles (3) extending in a straight line and continuously over a blank (7) corresponding to the workpiece, and which production installation is equipped with the following components having the following characterising features:
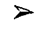 a forming press (20) which can be opened and closed, having a forming tool (21) consisting of a female mould (22) and a male mould (23),
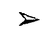 the female mould (22) disposed at the bottom of the forming press (20) is surrounded on all sides by a clamping frame (24) for a fibre mat blank (7) placed on it, which clamping frame (24) is retained so as to be spatially immobilised relative to the female mould (22) such that the retaining plane (flat face 30) of a fibre mat blank (7) received in the clamping frame (24) at least substantially coincides with the separating plane (25) of the female mould (22),
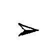 the clamping frame (24) is designed so that the edge (8) of a blank (7) placed on the clamping frame (24) can be firmly clamped so that when tension is applied to the blank (7), the edge (8) is able to slide out of the edge clamp against an adjustable resistance,
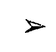 the female mould (22) and the clamping frame (24) are mounted so that they can be moved horizontally and guided (horizontal guide 41) as a unit (26), which can be moved backwards and forwards between a working position (A) lying in the forming press (20) underneath the male mould (23) on the one hand and a preparatory position (V, V') lying totally outside the forming press (20) on the other,
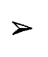 at least one industrial robot (58, 58') is disposed adjacent to the forming press (20) so that the preparatory position (V, V') of the female mould/clamping frame unit (26) lies within the working range of the industrial robot(s) (58, 58'),
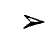 also disposed within the working range of the industrial robot(s) (58, 58') are supply bins (66) for holding insert parts (9) and/or locally delimited preforms (10) of fibre mats ready to hand,
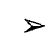 one of the industrial robots (58, 58') or the at least one industrial robot is provided with a hard-part gripper specifically adapted to the insert parts (9) to be inserted and/or with a textile-part gripper specifically adapted to the preforms (10) to be inserted,
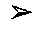 also disposed alongside the forming press (20) is an unreeling station (50) for at least one fibre mat web (2), which has a holding bar (57) which holds the free web end ready and a cutting device (51) for cutting through an unreeled length of fibre mat (2) adjacent to the holding bar (57), the holding bar (57) also lying within the working range of the industrial robot(s) (58, 58'),
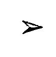 one of the industrial robots (58, 58') or the at least one industrial robot is also provided with a gripper (59') for pulling off a length of the reeled fibre mat web (2) and manipulating a cut blank (7),
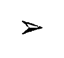 one of the industrial robots (58, 58') or the at least one industrial robot is also provided with a controllable applicator nozzle (61) for spraying a reactive matrix resin onto a partial preform placed in the female mould (22) disposed in the preparatory position (V, V') or a fibre mat blank (7) placed therein, this robot-guided applicator nozzle (61) co-operating with a supply and mixing station (62) for the individual components of the matrix resin.

16. Production installation as claimed in claim 15,
**characterised in that**
several, preferably two, separate units (26) consisting respectively of a female mould (22) and a clamping frame (24) are disposed so that they can be moved horizontally (horizontal guide 41) in and on the forming press (20) and can be displaced alternately in a reciprocating motion between a working position (A) and a preparatory position (V, V').

17. Production installation as claimed in claim 15,
**characterised in that**
two separate female mould/clamping frame units (26) are disposed on oppositely lying sides of the forming press (20).

18. Production installation as claimed in claim 17,
**characterised in that**
the two separate units (26) comprising a female mould (22) and a clamping frame (24) disposed on oppositely lying sides of the forming press are rigidly coupled with one another (connection 40) and are guided horizontally in a straight line as they are displaced (guide 41).

19. Production installation as claimed in claim 15,
**characterised in that**
the cutting device (51) for the fibre mat web (2) is a slim grinding wheel (52) rotating at high speed, which can be displaced at an adjustable forward rate (v) transversely above the fibre mat web (2) parallel with the rotation plane of the grinding wheel (52) and parallel with the holding bar (57) holding the free end of the fibre mat web (2).

20. Production installation as claimed in claim 19,
**characterised in that**
the grinding wheel (52) is encapsulated on the side where it emerges from the fibre web (2) and the encapsulation (53) is connected to a dust suction system (suction connection 69).

21. Production installation as claimed in claim 20,
**characterised in that**
the outer periphery of the encapsulation (53) has an opening (54) which can be closed by a flap (55) or a slide, intended for introducing a dressing tool (56) for the grinding wheel (52).

22. Production installation as claimed in claim 19,
**characterised in that**
the production installation is provided with a system for measuring the feed force by means of which the cutting device (51) is displaced through the fibre mat web (2) and with a signalling system which is configured so that outward signalling is triggered if the feeding force exceeds a pre-settable threshold value.

23. Production installation as claimed in claim 19 and 22,
**characterised in that**
the grinding wheel (52) is provided with a dressing tool which is fed in radially and is mechanically guided in the axial direction relative to it, which is in turn provided with an axial servo-motor forward drive and a radial servo-motor feed drive, by means of which the grinding wheel (52) can be automatically dressed when prompted by a dressing command run as part of a pre-settable programme.

24. Production installation as claimed in claim 15,
**characterised in that**
the frame legs (29, 29') of the clamping frame (24) holding the edge (8) of a blank (7) placed on the clamping frame (24) are designed respectively as suction bars (29, 29') which can be covered (cover plate 36), and their cross section is a closed hollow profile with a flat face (30) which receives the edge (8) of the blank (7) and is provided with a pattern of bores (31) covering its surface, it being possible for the interior of the hollow profile to be selectively connected to a vacuum pressure source (33) or to ambient pressure by means of a controllable valve (34).

25. Production installation as claimed in claim 24,
**characterised in that**
at least one of the clamping frame suction bars (29) is subdivided into chambers (35) which are divided from one another and can be separately controlled.

26. Production installation as claimed in claim 15,
**characterised in that**
the surface of the flat face (30) of the clamping frame suction bars (29, 29') receiving the edge (8) of the blank (7) is at least partially smooth and is rounded at the point where it meres into the bores (31) of the surface-covering bore pattern.

27. Production installation as claimed in claim 15,
**characterised in that**
the cover (36) of the frame legs of the clamping frame (24) provided as suction bars (29, 29') is disposed on the male mould (23), which can be raised and lowered into the forming press (20), and is lowered onto the edge (8) of the blank (7) held in the clamping frame (24) as the male mould (23) is lowered and is elastically (springs 37) biassed against it (8).

28. Production installation as claimed in claim 15,
**characterised in that**
the gripper bars for manipulating the blank (7) are designed as suction bars (59, 59') which can be covered and their cross section is a closed hollow profile with a flat face which can be placed on the edge (8) of the blank (7) and is provided with a pattern of bores (74) covering its surface, it being possible for the interior of the hollow profile to be selectively connected to a vacuum pressure source (33) or to ambient pressure by means of a controllable valve (63).

29. Production system as claimed in claim 15,
**characterised in that**
the surface of the flat face of the suction bars (59, 59') which can be placed on the edge (8) of the blank (7) is roughened (roughening 64) or grooved for manipulating the blank (7).

30. Production installation as claimed in claim 15,
**characterised in that**
two separate gripper bars (59, 59') are provided for manipulating the blank (7), each of which is disposed on the working arm of a separate respective industrial robot (58, 58').

31. Production installation as claimed in claim 15,
**characterised in that**
the textile-part gripper for manipulating the partial preforms (10) is a needle gripper.

32. Production installation as claimed in claim 15,
**characterised in that**
all the infrastructure systems of the production installation such as industrial robots (58, 58'), unreeling station (50), cutting device (51), supply bins (66) and positioning stations (67) are duplicated, preferably symmetrically relative to the centre of the forming press (20).

33. Production installation as claimed in claim 15,
**characterised in that**
the logistics systems of the production installation, namely the unreeling station (50), the supply bins (66) and the positioning stations (67), are disposed on the periphery of the production installation.

## Revendications

1. Procédé de fabrication de pièces en plastique (1) en forme de coques composées de plastique thermodurcissable renforcé en fibres dans une presse de formage (20) avec un gabarit (21) comprenant une matrice (22) et une contre-matrice (23), au cours duquel les mesures suivantes successives sont prises :
a) une découpe (7) conforme à la pièce, séparée du mat fibreux continu (2), est déposée de façon automatisée par des robots industriels (58, 58') sur la matrice (22) déplacée depuis la presse de formage (20), et elle y est serrée en étant guidée par une rame (24) qui l'entoure,
b) la découpe (7) déposée dans la rame (24) est aspergée sur toute la surface d'une quantité définie de résine matricielle réactive dans la zone recouvrant la matrice (22) par un gicleur de pulvérisation (61) dirigé de façon mobile à distance (a) de la découpe (7),
c) après le retour de l'unité (26) matrice/rame dans la presse de formage (20) et la fermeture du gabarit (21), en maintenant une contrainte de traction définie dans la découpe (7), celle-ci est drapée sans pli ni tracé dans la matrice (22), la découpe (7) est formée dans la forme de coque souhaitée, et la résine matricielle est comprimée dans le même temps dans les espaces intermédiaires fibreux et l'air enfermé y est supprimé,
d) le mat fibreux (7) imprégné de résine est maintenu à l'état comprimé et formé pendant un délai convenu, et la résine matricielle est durcie à l'intérieur du gabarit (21),
e) après l'ouverture du gabarit (21), la pièce en plastique (1) est retirée, et le bord (8) de découpe situé à l'extérieur de la forme de coque souhaitée de la pièce, servant au desserrage de la découpe (7) pendant la phase de formage est séparé de la pièce.

2. Procédé selon la revendication 1, **caractérisé en ce que**, en raison d'une disposition multiple, de préférence double, des unités (26) mobiles horizontalement composées de la matrice (22) et de la rame (24), les différentes unités (26) sont équipées pendant le cycle alternatif en dehors de la presse de formage (20) et traitées à l'intérieur de la presse de formage (20).

3. Procédé selon la revendication 1, **caractérisé en ce que**, l'extrémité libre d'une bande (2) de mat fibreux enroulée sur un rouleau de stockage (5), qui est maintenue prête en position définie par une barre de retenue (57) stationnaire pouvant être manoeuvrée en fonctionnement de retenue, est saisie sur toute la largeur de bande par une barre de préhension (59') robotisée, un tronçon correspondant à la pièce de la bande de mat fibreux (2) est extrait par le rouleau de stockage (5), l'autre extrémité du tronçon est saisie également sur toute la largeur de bande par une seconde barre de préhension (59) robotisée, la bande de mat fibreux (2) est séparée dans la zone située entre la barre de retenue (57) stationnaire et la seconde barre de préhension (59), et le tronçon séparé (7) est déposé sur la rame (24).

4. Procédé selon la revendication 1, **caractérisé en ce que**, le tronçon d'un mat fibreux (2) correspondant à la pièce extrait d'un rouleau de stockage (5) est séparé de la bande de mat fibreux enroulée par une meule (52) étroite hautement rotative qui se déplace à travers le mat fibreux (2) parallèlement au plan de rotation le long d'une ligne entre deux barres de retenue ou de préhension (57, 59) retenant la bande de mat fibreux (2) très proches avec une vitesse d'avance définie (v).

5. Procédé selon la revendication 1, **caractérisé en ce que**, la découpe (7) correspondant à la pièce séparée d'une bande de mat fibreux (2) préalablement stockée est prise en charge sur deux faces opposées des barres de préhension (59, 59') robotisées et déposée sur la rame (24) et la matrice (22).

6. Procédé selon la revendication 1, **caractérisé en ce que**, avant la réception de la découpe ou d'une première découpe (7) de plusieurs découpes sur la rame (24), des inserts (9) tout d'abord et/ou des préformes (10) limitées localement sont déposées dans la matrice (22).

7. Procédé selon la revendication 6, **caractérisé en ce que**, toutes les préformes (10) devant être déposées précédemment avant la réception de la découpe (7) sur la rame (24) sont recouvertes en surface par pulvérisation d'une quantité définie de résine matricielle.

8. Procédé selon la revendication 1, **caractérisé en ce que**, le dépôt et le maintien d'une découpe (7) correspondant à la pièce sur ou contre la rame (24), et la pulvérisation consécutive de la découpe déposée (7) avec de la résine matricielle réactive selon le nombre de couches souhaité, sont répétés, et seulement ensuite le formage et la presse des découpes (7) déposées et pulvérisées sont réalisées en commun pour tous.

9. Procédé selon la revendication 1, **caractérisé en ce que**, de la résine époxyde est utilisée comme résine matricielle, laquelle présente une viscosité fluide apte à la pulvérisation, moyennant quoi le gicleur de pulvérisation (61) est sélectionné et/ou réglé au niveau de la forme de jet, de sorte qu'en tenant compte de la distance ( a) du gicleur de pulvérisation (61) par rapport à la découpe de mat fibreux devant être pulvérisée pendant le mouvement du gicleur de pulvérisation, une largeur (b) de 5 à 15 cm, de préférence d'environ 10 cm est recouverte par pulvérisation de résine époxyde.

10. Procédé selon la revendication 1, **caractérisé en ce que**, aux fins de maintien d'une certaine contrainte de traction dans la découpe (7) pendant le drapage de celle-ci dans la forme de coque déterminée par la matrice (22), et pendant le glissement ultérieur du bord (8) de découpe hors de la fixation du bord du côté de la rame (24) entourant la matrice (22) - appelée ci-après phase de drapage - le bord (8) de découpe est recouvert en surface sur une largeur définie et le recouvrement (36), y compris le bord (8) de découpe, est aspiré avec une force définie contre la face supérieure (30) perméable à l'air de la rame (24) mise sous vide.

11. Procédé selon la revendication 10, **caractérisé en ce que**, le recouvrement (36) avec le bord (8) de découpe pendant la phase de drapage est aspiré par secteur avec une force variable contre la rame (24) subdivisée sectoriellement en diverses chambres (35) et mise sous vide de manière plus ou moins forte.

12. Procédé selon la revendication 10, **caractérisé en ce que**, le recouvrement (36) avec le bord de découpe (8) pendant la phase de drapage est aspiré avec une force variable contre la rame en modifiant temporellement le vide dans la rame (24) ou les secteurs de cette même rame.

13. Procédé selon la revendication 10, **caractérisé en ce que**, le bord (8) de découpe pendant la phase de drapage est comprimé, en sus de la pression du vide par le recouvrement (36) auto-rigide élastiquement précontraint, mécaniquement contre la face supérieure (30) de la rame (24) avec une force pouvant être ajustée au préalable.

14. Procédé selon la revendication 1, **caractérisé en ce que**, le rognement de la forme de coque de la pièce, c'est-à-dire la séparation du bord (8) de découpe servant au desserrage de la découpe (7) pendant la phase de formage, de la pièce (1), est réalisé par une meule étroite hautement rotative.

15. Dispositif de production pour la fabrication de pièces en plastique (1) en forme de coques renforcées en fibres, en particulier pour l'exécution du procédé selon la revendication 1, ces pièces en plastique (1) étant constituées d'un mat fibreux continu (7) suivant la forme de la coque d'au moins une couche et d'une matrice en plastique thermodurcissable enrobant les fibres (3) du mat fibreux (7) sur tous les côtés et sans pores - désignée ci-après « résine matricielle » -, lequel mat fibreux continu à l'état de départ est formé de fibres ou de faisceaux fibreux (3) droits et ininterrompus s'étendant au-dessus d'une découpe (7) correspondant à la pièce, et lequel dispositif de production étant équipé des composants suivants et ceux-ci étant configurés avec les caractéristiques suivantes :
une presse de formage (20) pouvant être ouverte et fermée avec un gabarit (21) composé d'une matrice (22) et d'une contre-matrice (23),
la matrice (22) disposée en bas dans la presse de formage est entourée sur tous les côtés d'une rame (24) pour une découpe (7) de mat fibreux déposée sur celle-ci, la rame (24) étant maintenue dans une relation spatialement immuable par rapport à la matrice (22), moyennant quoi le plan de fixation (face plate 30) d'une découpe (7) de mat fibreux logée dans la rame (24) concorde au moins de manière approchée avec le plan de joint (25) de la matrice (22),
la rame (24) est configurée de telle sorte que le bord (8) d'une découpe (7) déposée sur la rame (24) peut être coincé de manière à ce que lors de l'action de traction sur la découpe (7), le bord (8) peut être coulissé contre la résistance réglable et extrait de la fixation du bord,
la matrice (22) et la rame (24) sont positionnées en étant mobiles horizontalement et guidées (guidage horizontal 41) en tant qu'unité, qui se déplace selon un mouvement de va-et-vient entre une position de travail (A) située dans la presse de formage (20) sous la contre-matrice (23) d'une part, et une position de préparation (V, V') d'autre part située entièrement en dehors de la presse de formage (20),
à côté de la presse de formage (20) est disposé au moins un robot industriel (58, 58'), de sorte que la position de préparation (V, V') de l'unité (26) matrice/rame se trouve à l'intérieur de la zone de travail du/des robots industriels (58, 58'),
à l'intérieur de la zone de travail du/des robots industriels (58, 58') sont en outre disposés des réservoirs d'approvisionnement (66) pour l'approvisionnement adapté à la prise d'inserts (9) et/ou de préformes (10) limitées localement en mat fibreux,
un des robots industriels (58, 58') prévus ou au moins un robot industriel est doté d'un grappin de pièces dures adapté aux inserts (9) devant être déposés et/ou d'un grappin de pièces textiles adapté aux préformes (10) devant être déposées,
à côté de la presse de formage (20) est en outre disposée une station de déroulement (50) pour au moins une bande de mat fibreux (2), laquelle station comprend une barre de retenue (57) pour la fixation de l'extrémité de bande libre, et un dispositif de découpe (51) pour la séparation d'un tronçon d'un mat fibreux (2) extrait à côté de la barre de retenue (57), la barre de retenue (57) étant également située à l'intérieur de la zone de travail du/des robots industriels (58, 58'),
un des robots industriels (58, 58') prévus ou au moins un robot industriel est de plus doté d'un grappin (59') pour le retrait d'un tronçon de la bande de mat fibreux (2) préstockée et pour la manipulation d'un tronçon (7) séparé,
un des robots industriels (58, 58') prévus ou au moins un robot industriel est en outre doté d'une buse d'application (61) pouvant être commandée pour la pulvérisation d'une résine matricielle réactive sur une préforme partielle déposée sur la matrice (22) se trouvant dans la position de préparation (V, V'), ou sur une découpe (7) de mat fibreux déposée à cet endroit, une station de stockage et de mélange (62) étant attribuée à cette buse d'application (61) robotisée pour les différents composants de la résine matricielle.

16. Dispositif de production selon la revendication 15, **caractérisé en ce que**, dans et contre la presse de formage (20) sont disposées plusieurs, de préférence deux unités (26) séparées composées chacune d'une matrice (22) et d'une rame (24), mobiles horizontalement (guidage horizontal 41), lesquelles peuvent être coulissées alternativement dans les deux sens entre une position de travail (A) et une position de préparation (V, V').

17. Dispositif de production selon la revendication 15, **caractérisé en ce que**, deux unités (26) matrice/rame séparées sont disposées sur des faces opposées de la presse de formage (20).

18. Dispositif de production selon la revendication 17, **caractérisé en ce que**, les deux unités (26) séparées composées de la matrice (22) et de la rame (24) disposées sur des faces opposées de la presse de formage sont couplées ensemble de manière rigide (liaison 40) et sont dirigées ensemble de manière coulissante horizontalement en ligne droite (guidage 41).

19. Dispositif de production selon la revendication 15, **caractérisé en ce que**, le dispositif de découpe (51) pour la bande de mat fibreux (2) est formé par une meule (52) étroite hautement rotative, lequel est coulissant parallèlement au plan de rotation de la meule (52) et parallèlement à la barre de retenue (57) fixant l'extrémité libre de la bande de mat fibreux (2) avec une vitesse d'avance (v) réglable, transversalement au-dessus de la bande de mat fibreux (2).

20. Dispositif de production selon la revendication 19, **caractérisé en ce que**, la meule (52) est encapsulée sur la face émergeant de la bande de mat fibreux (2), et l'encapsulage est raccordé à une aspiration des poussières (raccord d'aspiration 69).

21. Dispositif de production selon la revendication 20, **caractérisé en ce que**, sur le pourtour de l'encapsulage (53), un orifice (54) pouvant être fermé par un clapet (55) ou une valve est prévu pour l'introduction d'un outil de dressage (56) pour la meule (52).

22. Dispositif de production selon la revendication 19, **caractérisé en ce que**, le dispositif de production pour l'avance du dispositif de découpe (51) dans la bande de mat fibreux (2) est doté d'un dispositif de mesure de la force d'avance et d'un dispositif de signal configuré de telle sorte qu'un dépassement de la force d'avance peut être signalisé vers l'extérieur via une valeur de seuil préalablement ajustable.

23. Dispositif de production selon les revendications 19 et 22, **caractérisé en ce que**, la meule (52) est dotée d'un outil de dressage dirigé mécaniquement dans le sens axial par rapport à celle-ci, pouvant être approché radialement, cet outil étant lui-même équipé d'un entraînement d'avance servomoteur axial et d'un entraînement d'approche servomoteur radial, avec lesquels la meule (52) peut être dressée automatiquement sur une instruction de dressage selon un programme pouvant être défini préalablement.

24. Dispositif de production selon la revendication 15, **caractérisé en ce que**, les côtés de trame (29, 29') de la rame (24) qui maintiennent le bord (8) d'une découpe (7) déposée sur la rame (24) sont chacun configurés comme des bandeaux d'aspiration (29, 29') recouvrables (tôle de recouvrement 36), lesquels sont configurés dans la section transversale comme un profilé creux fermé avec une face plate (30) logeant le bord (8) de la découpe (7) et dotée d'une trame d'orifices (31) recouvrant la surface, moyennant quoi l'intérieur du profilé creux peut être raccordé via une soupape de commande (34) au choix à une source de dépression (33) ou alimenté avec la pression d'air ambiant.

25. Dispositif de production selon la revendication 24, **caractérisé en ce que**, au moins un des bandeaux d'aspiration (29) de la rame est divisé en chambres (35) cloisonnées en vis-à-vis et commandées séparément.

26. Dispositif de production selon la revendication 15, **caractérisé en ce que**, la surface, logeant le bord (8) de la découpe (7), de la face plate (30) des bandeaux d'aspiration (29, 29') de la rame est configurée au moins de manière partiellement lisse, et dépasse en arrondi dans les orifices (31) de la trame d'alésage recouvrant la surface.

27. Dispositif de production selon la revendication 15, **caractérisé en ce que**, le recouvrement (36) des côtés de la rame (24) configurés comme des bandeaux d'aspiration (29, 29') est disposé contre la contre-matrice (23) abaissable et relevable dans la presse de formage (20) et peut être pressé, avec la contre-matrice (23) descendant, sur le bord (8) de la découpe (7) logée dans la rame (24), contre celui-ci (8) par un mouvement descendant et élastique (ressort 37).

28. Dispositif de production selon la revendication 15, **caractérisé en ce que**, les barres de préhension sont configurées pour la manipulation de la découpe (7) comme un bandeau d'aspiration (59, 59') recouvrable, lequel est configuré dans la section transversale comme un profilé creux fermé avec une face plate applicable sur le bord (8) de la découpe (7), dotée d'une trame d'orifices (74) recouvrant la surface, moyennant quoi l'intérieur du profilé creux peut être raccordé via une soupape de commande (63) au choix à une source de dépression (33) ou alimenté avec la pression d'air ambiant.

29. Dispositif de production selon la revendication 15, **caractérisé en ce que**, la surface applicable contre le bord (8) de la découpe (7) de la face plate des bandeaux d'aspiration (59, 59') est rendue rugueuse (grenaillage 64) ou cannelée pour la manipulation de la découpe (7).

30. Dispositif de production selon la revendication 15, **caractérisé en ce que**, deux barres de préhension (59, 59') séparées sont prévues pour la manipulation de la découpe (7), dont chacune est disposée sur le bras de travail d'un robot industriel séparé respectif (58, 58').

31. Dispositif de production selon la revendication 15, **caractérisé en ce que**, le grappin de pièces textiles est configuré pour la manipulation des préformes partielles (10) en tant que grappin à aiguille.

32. Dispositif de production selon la revendication 15, **caractérisé en ce que**, tous les équipements infrastructurels du dispositif de production, tels que les robots industriels (58, 58'), la station de déroulement (50), le dispositif de découpe (51), les réservoirs d'approvisionnement (66) et les stations de réception (67), sont disposés en double, de préférence symétriquement par rapport au centre de la presse de formage (20).

33. Dispositif de production selon la revendication 15, **caractérisé en ce que**, les équipements de logistique du dispositif de production, à savoir la station de déroulement (50), les réservoirs d'approvisionnement (66) et les stations de réception (67), sont disposés en périphérie du dispositif de production.
